# EUROPEAN PATENT APPLICATION

(11) **EP 4 607 806 A1**
(43) Date of publication of application: **27.08.2025**
(21) Application number: 25159428.9
(22) Date of filing: 21.02.2025
(51) Int. Cl.: H04B 1/403, H04B 7/06, H04B 1/00

(54) **FREQUENCY AGILE TRANSMITTER AND RECEIVER**

(30) Priority: 23.02.2024 AU 2024900440; 23.02.2024 US 202463557422 P
(71) Applicant: Millibeam Holdings Pty Ltd, Eveleigh, NSW 2015 (AU)
(72) Inventor: GUTTA, Venkata Krishna Mohan, Eveleigh, NSW 2015 (AU); SMITH, Fergal Anthony, Eveleigh, NSW 2015 (AU); ANTIOHOS, Robabeh Amirkhanzadeh, Eveleigh, NSW 2015 (AU); HWANG, Sun Min, Eveleigh, NSW 2015 (AU)
(74) Representative: Ricker, Mathias

(57) **Abstract**

Disclosed is a frequency-agile transmitter for transmitting either a low or a high frequency signal. The transmitter comprises a low frequency mixing stage for combining at least two input signals encoding input data, the at least two input signals being further combined with a local oscillator signal when transmitting the low frequency signal. The transmitter also includes a transmit element for receiving output from the low frequency mixing stage. The transmit element includes a signal controller for selectively sending the output from the low frequency mixing stage to one of a low frequency transmission path, to transmit the low frequency signal, and a high frequency mixing stage, wherein the high frequency mixing stage up-converts the output from the low frequency mixing stage with a local oscillator signal when transmitting the high frequency signal along the high frequency transmission path. The transmit element also includes at least one antenna for outputting one of the low frequency signal and the high frequency signal.

## Description

### Technical Field

The present invention generally relates to radio frequency transmitters and receivers and more particularly to a transmitter and receiver for multi-band transmissions.

### Background

Current communication standards, such as the 5G standard for mobile communications, rely on multiple bands. The multiple bands include low-band/mid-band frequencies (FR1 bands < 6GHz), also referred to as sub 6GHz, and high-band or millimetre wavelength frequencies (FR2 bands > 24-30 GHz, 37-40GHz and >50GHz). The low-band 5G systems or radios have longer range than high-band millimetre wavelength 5G systems while millimetre wavelength 5G systems have the advantage of supporting wider bandwidth signals and hence higher data rates, but at the expense of limited signal range and coverage.

The low-band and the high-band 5G systems each have their own advantages and disadvantages. As a result, the two systems are combined in communication systems to allow a selection between bandwidth and range to be chosen based on an operating environment. For communication systems relying on multiple frequency bands or equipment integrating multiple standards using different frequency bands they typically require multiple systems, or radios, to allow the communication system to communicate using the multiple frequencies. Typically a dedicated radio is required for each frequency band that is used.

It is not unusual to see communication systems that support multiple frequency bands and communication standards. For example, mobile handsets may have multiple chipsets or modules, each of which supports a specific frequency band or standard. Most of these communication systems rely on being able to switch between these systems or modules as needed to us the different frequency bands.

The cost of building such solutions may be quite high as separate chips and modules are needed to create multi-band transmission.

### Summary

This Summary is provided to introduce a selection of concepts in a simplified form which will be elaborated upon below in the Detailed Description. This Summary is not intended to identify essential features of the claimed subject matter, nor is it intended to be used to limit the scope for the claimed subject matter.

One or more embodiments of the present invention comprise a frequency-agile transmitter for transmitting either a low or a high frequency signal, the transmitter comprising: a low frequency mixing stage for combining at least two input signals encoding input data, the at least two input signals being further combined with a local oscillator signal when transmitting the low frequency signal; a transmit element for receiving output from the low frequency mixing stage, the transmit element including: a signal controller for selectively sending the output from the low frequency mixing stage to one of a low frequency transmission path, to transmit the low frequency signal, and a high frequency mixing stage, wherein the high frequency mixing stage up-converts the output from the low frequency mixing stage with a local oscillator signal when transmitting the high frequency signal along the high frequency transmission path; and at least one antenna for outputting one of the low frequency signal and the high frequency signal..

In one embodiment, the signal controller is a radio frequency switch.

In one embodiment, the frequency-agile transmitter is a beamforming frequency-agile transmitter, the beamforming frequency-agile transmitter further comprising: a power splitter for generating at least two outputs from the low frequency mixing stage; a plurality of digital phase shifters for adjusting the phase of the at least two outputs; and a plurality of the transmit elements, each of the plurality of transmit elements receiving output from one of the plurality of digital phase shifters.

In one embodiment, the at least one antenna has dual-resonance and can simultaneously transmit the high frequency signal and the low-frequency signal.

In one embodiment, each of the plurality of transmit elements has an antenna for the low frequency transmission path and an antenna for the high frequency transmission path.

In one embodiment, the transmitter further comprises: a plurality of variable gain amplifiers, each of the plurality of variable gain amplifiers operating on one of the at least two outputs.

In one embodiment, the plurality of digital phase shifters and the plurality of variable gain amplifiers enable generation of a narrow beam including the high-frequency signal and a narrow beam including the low-frequency signal, in a far-field of each of the at least one antenna of the plurality of transmit elements
In one embodiment, each of the plurality of variable gain amplifiers and the plurality of digital phase shifters have a different configuration when using the low frequency transmission path compared to the high frequency transmission path.

In one embodiment, the transmitter further comprises a second high frequency transmission path for a second high frequency signal, and being output by the at least one antenna.

In one embodiment, components of the low frequency mixing stage operate outside a frequency region of interest for the high frequency transmission path.

In one embodiment, the frequency-agile transmitter is a selectable mode frequency-agile transmitter that can transmit in a mode selected from the set consisting of a MIMO mode and a beamforming mode, the selectable mode frequency-agile transmitter further comprising: a plurality of lines, a first of the plurality of lines receiving input of the at least two input signals and remaining lines of the plurality of lines being switchable between the at least two input signals and separate MIMO input signals; a plurality of digital phase shifters for adjusting the phase of each of the lines; and a plurality of the transmit elements, each of the plurality of transmit elements receiving output from one of the plurality of digital phase shifters to transmit a signal from one of the lines.

In one embodiment, each of the MIMO input signals for the remaining lines are received from a corresponding digital to analog converter, each of the digital to analog converters are powered off when the selectable mode frequency-agile transmitter is operating in the beamforming mode.

In one embodiment, the plurality of phase shifters have an identical phase shift when the selectable mode frequency-agile transmitter is operating in the MIMO mode.

In one embodiment, the frequency-agile transmitter is a selectable mode frequency-agile transmitter that can transmit in a mode selected from the set consisting of a MIMO mode and a beamforming mode, the selectable mode frequency-agile transmitter further comprising: a plurality of lines, each of the plurality of lines having identical phase when in MIMO mode and an independent phase when in beamforming mode.

One or more embodiments of the present invention comprise a frequency-agile receiver for receiving a either low or a high frequency signal, the receiver comprising: a receive element including: at least one antenna for receiving the low frequency signal and the high frequency signal; and a signal controller for selectively sending an output to a low frequency mixing stage from a low frequency reception path, for receiving the low frequency signal, and from a high frequency mixing stage, wherein the high frequency mixing stage down-converts the high frequency signal with a local oscillator signal when receiving the high frequency signal of the high frequency reception path; and a low frequency mixing stage for receiving output from the receive element and separating at least two signals encoding data, the at least two signals being further separated from a local oscillator signal when receiving the low frequency signal.

In one embodiment, the signal controller is a radio frequency switch.

In one embodiment, the frequency-agile receiver is a beamforming frequency-agile receiver, the beamforming frequency-agile receiver further comprising: a plurality of the receive elements, each of the plurality of receive elements receiving at least one of the low frequency signal and the high frequency signal; a plurality of digital phase shifters, each of the phase shifter adjusting the phase of an output from one of the plurality of receive elements; and a power combiner for combining an output from the plurality of phase shifters and sending a combined signal to the low frequency mixing stage.

In one embodiment, the at least one antenna has dual-resonance and can simultaneously receive the high frequency signal and the low-frequency signal.

In one embodiment, each of the plurality of receive elements have an antenna for the low frequency reception path and an antenna for the high frequency reception path.

In one embodiment, the receiver further comprises: a plurality of variable gain amplifiers, each of the plurality of variable gain amplifiers operating on the output from one of the plurality of receive elements.

In one embodiment, the plurality of digital phase shifters and the plurality of variable gain amplifiers enable reception of a narrow beam including the high-frequency signal and a narrow beam including the low-frequency signal.

In one embodiment, each of the plurality of variable gain amplifiers and the plurality of digital phase shifters have a different configuration when using the low frequency reception path compared to the high frequency reception path.

In one embodiment, the receiver further comprises a second high frequency reception path for a second high frequency signal, and being received by the at least one antenna.

In one embodiment, components of the low frequency mixing stage and the high frequency mixing stage provide image rejection for the high frequency signals received by the frequency-agile receiver.

In one embodiment, the frequency-agile receiver is a selectable mode frequency-agile receiver that can receive in a mode selected from the set consisting of a MIMO mode and a beamforming mode, the selectable mode frequency-agile receiver further comprising: a plurality of lines, a first of the plurality of lines outputting of the at least two signals and remaining lines of the plurality of lines being switchable between the at least two signals and separate MIMO output signals, each line having: one of the plurality of receive elements, each of the plurality of receive elements receiving at least one of the low frequency signal and the high frequency signal; and one of a plurality of digital phase shifters, the phase shifter adjusting the phase of an output from the receive element.

In one embodiment, each of the MIMO output signals for the remaining lines are sent to a corresponding analog to digital converter, wherein each of the analog to digital converters being powered off when the selectable mode frequency-agile receiver is operating in the beamforming mode.

In one embodiment, the plurality of phase shifters have an identical phase shift when the selectable mode frequency-agile receiver is operating in the MIMO mode.

In one embodiment, wherein the frequency-agile receiver is a selectable mode frequency-agile receiver that can receive in a mode selected from the set consisting of a MIMO mode and a beamforming mode, the selectable mode frequency-agile receiver further comprising: a plurality of lines, each of the plurality of lines having identical phase when in MIMO mode and an independent phase when in beamforming mode.

### Brief Description of Figures

At least one embodiment of the present invention is described, by way of example only, with reference to the accompanying figures.
Figure 1 illustrates a transmitter system;
Figure 2 illustrates a frequency-agile transceiver according to one embodiment;
Figure 3 illustrates a beamforming frequency-agile transceiver according to one embodiment;
Figures 4A and 4B illustrate a single antenna transmit element and a single antenna receive element for use in the frequency-agile transceivers of Figure 2 or Figure 3;
Figure 5 illustrates a process for implementing a frequency-agile transmitter;
Figure 6 illustrates a process for implementing a frequency-agile receiver;
Figures 7A and 7B illustrate a transmitter common mixing stage and a receiver common mixing stage respectively;
Figure 8 illustrates a selectable mode frequency-agile transmitter according to one embodiment;
Figure 9 illustrates a selectable mode frequency-agile receiver according to one embodiment;
Figure 10 illustrated an alternative selectable mode frequency-agile transmitter according to one embodiment; and
Figure 11 illustrates an alternative selectable mode frequency-agile receiver according to one embodiment.

### Detailed Description

The following description, given by way of example only, is described in order to provide a more precise understanding of one or more of the embodiments. In the figures, like reference numerals are used to identify like parts throughout the figures.

Disclosed is an integrated transceiver system, which can support multiple frequency bands defined within the same communication standard, as well as multiple bands spread across multiple standards, thereby making a single chipset more universal in terms of hardware usability. The integrated transceiver system includes both a transmitter and a receiver that are able to communicate using multiple frequency bands through the use of common hardware components.

Disclosed is a frequency-agile transmitter for transmitting a low and a high frequency signal. The transmitter comprises a low frequency mixing stage for combining at least two input signals encoding input data. The at least two input signals being further combined with a local oscillator signal when transmitting the low frequency signal. The transmitter also includes a transmit element for receiving output from the low frequency mixing stage. The transmit element also includes a signal controller to send the output from the low frequency mixing stage along a low frequency transmission path to transmit the low frequency signal and to send the output from the low frequency mixing stage to a high frequency mixing stage for up-converting the output from the low frequency mixing stage with a local oscillator signal when transmitting the high frequency signal of the high frequency transmission path. The transmit element also includes at least one antenna for outputting one of the low frequency signal and the high frequency signal.

Also disclosed is a frequency-agile transmitter for transmitting either a low or a high frequency signal. The transmitter comprises a low frequency mixing stage for combining at least two input signals encoding input data, the at least two input signals being further combined with a local oscillator signal when transmitting the low frequency signal. The transmitter also comprises a transmit element for receiving output from the low frequency mixing stage. The transmit element comprises a signal controller for selectively sending the output from the low frequency mixing stage to one of a low frequency transmission path, to transmit the low frequency signal, and a high frequency mixing stage, wherein the high frequency mixing stage up-converts the output from the low frequency mixing stage with a local oscillator signal when transmitting the high frequency signal along the high frequency transmission path. The transmit element also comprises at least one antenna for outputting one of the low frequency signal and the high frequency signal.

Also discloses is a frequency-agile receiver for receiving a low and a high frequency signal. The receiver comprises a receive element which includes at least one antenna for receiving the low frequency signal and the high frequency signal. The receive element also includes a signal controller to send an output to a low frequency mixing stage, the signal controller receiving input from a low frequency reception path for receiving the low frequency signal and receiving an input from a high frequency mixing stage for down-converting the high frequency signal with a local oscillator signal when receiving the high frequency signal of the high frequency reception path. The receiver also includes a low frequency mixing stage for receiving output from the receive element and separating at least two signals encoding data, the at least two signals being further separated from a local oscillator signal when receiving the low frequency signal.

Also disclosed is a frequency-agile receiver for receiving a either low or a high frequency signal, the receiver comprises a receive element that includes at least one antenna for receiving the low frequency signal and the high frequency signal. The receiver element also includes a signal controller for selectively sending an output to a low frequency mixing stage from a low frequency reception path, for receiving the low frequency signal, and from a high frequency mixing stage, wherein the high frequency mixing stage down-converts the high frequency signal with a local oscillator signal when receiving the high frequency signal of the high frequency reception path. The receiver also comprises a low frequency mixing stage for receiving output from the receive element and separating at least two signals encoding data, the at least two signals being further separated from a local oscillator signal when receiving the low frequency signal.

A frequency-agile transceiver architecture provides a way to generate both a low/mid frequency signal and a high frequency signal by first generating the low/mid frequency signal by frequency upconverting the in-phase (I) and quadrature-phase (Q) baseband waveforms by means of an RF mixer. The low/mid frequency band signal, so generated from I-Q waveforms can be split into at least two paths, a low/mid frequency path and a high frequency path.

In the case of the low/mid frequency path, the signal can be amplified and transmitted via an antenna. For the high frequency path, the low/mid frequency band signal may be frequency upconverted to a high frequency signal for further amplification via a power amplifier and transmitted via an antenna. The path selection is made through an RF switch, which can be controlled to switch between the low/mid frequency path or the high frequency path.

By using a transmit path architecture that employs a single-conversion mixing stage for the low/mid frequency signal, along with an array of phase shifters and variable gain amplifiers needed for beamforming, amplifiers for boosting the signal, and mixing in the high-band path, both the low/mid frequency signal and the high frequency signal can be generated. The first stage of mixing is common to both the low/mid frequency and high frequency paths and may be referred to as a low/mid frequency mixing stage or as a common mixing stage. The high frequency path essentially uses the same transmit path as the low/mid frequency, at least until a second-conversion mixing stage, or high frequency mixing stage, is required to upconvert the low/mid frequency signal to the high frequency band signal.

A similar process happens in the receive path where the dual-conversion stage mixing enables demodulation of the high frequency signal to baseband IQ components and the low/mid frequency signal is only down-converted once, to get the baseband I and Q signals. The low/mid frequency path and the high frequency path both share the same circuitry after a receive RF switch, which includes the common mixing stage.

### Transmitter system

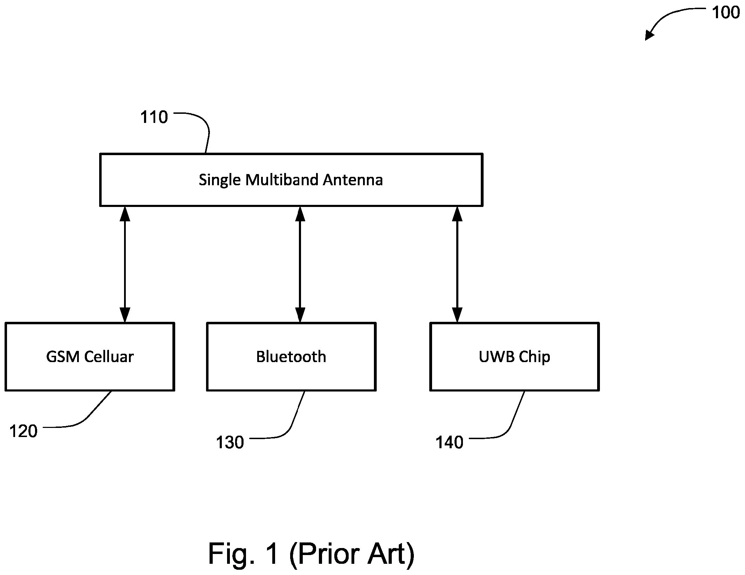

Figure 1 shows a conventional approach where multiple chips are used for different standards and/or different frequency bands. The chips are selected, one at a time, for operation of the system. The transmitter system 100 uses a single antenna 110 to transmit signals for each of the standards and/or different frequencies. The transmitter system 100 uses the single antenna 110 to send signals from one of three separate transmitters, being a GSM cellular transmitter 120, a Bluetooth transmitter 130 and an ultra-wideband transmitter 140. The transmitter system 100 has the advantage of using the single antenna 110 for transmitting, but has the three separate transmitters. Additional transmitters would be added in parallel to the transmitter system 100 if additional standards and/ frequency bands are to be supported.

The disclosed frequency-agile transceiver systems do not require multiple, different chipsets to support multiple frequency bands and/or multiple communication standards.

### Frequency-agile transceiver

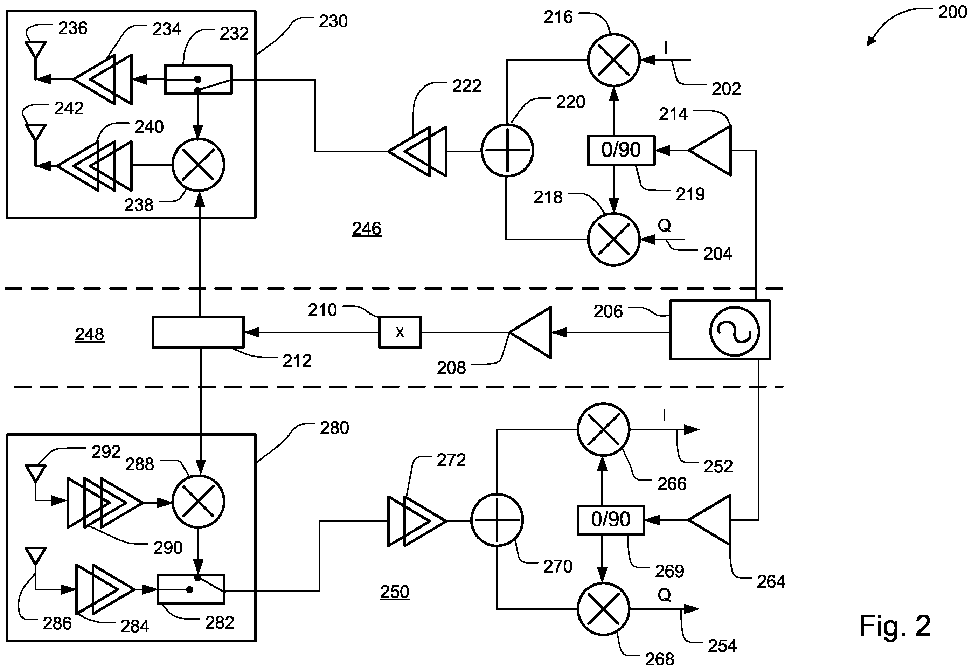

Figure 2 is an example transceiver that supports multiple frequency bands and/or multiple communication standards with a frequency-agile transceiver 200. The frequency-agile transceiver 200 is a single-beam transceiver that is able to transmit and receive at either high, millimetre wavelength, or low/mid, sub-6GHz, radio frequencies. The frequency-agile transceiver 200 is typically used as a component in a system such as a mobile phone or a base station for mobile telephony. The frequency-agile transceiver 200 includes a frequency-agile transmitter and a frequency-agile receiver.

There are three main components to the frequency-agile transceiver 200. The first is a transmit path 246 which operates as the frequency-agile transmitter and transmits either high or low/mid radio frequencies through a high frequency transmission path or a low/mid frequency transmission path. A second component is a receive path 250 operating as the frequency-agile receiver which receives either high or low/mid radio frequencies through a high frequency reception path or a low/mid frequency reception path. A third component is a signal generation chain 248 used by both the transmit path 246 and/or the receive path 250.

### Signal generation chain

The signal generation chain 248 has a signal synthesiser 206 that generates a local oscillator signal to pump, or drive, the radio frequency mixers of the transmit path 246 or the receive path 250. The local oscillator signal generated by the signal synthesiser 206 is used to create frequency converted signals which can be up converted for the transmit path 246 and down-converted for the receive path 250. A typical signal source for the signal synthesiser 206 is a voltage-controlled oscillator embedded as part of a phase-locked loop. One output of the signal synthesiser 206 is sent to a local oscillator amplifier 208 which increased an amplitude level, or the power level, of the signal from the signal synthesiser 206.

A local oscillator frequency multiplier 210 receives output from the local oscillator amplifier 208 and increases the frequency of the output signal by a multiplication factor n, where n may be an integer 1, 2, 3, 4 etc. The local oscillator frequency multiplier 210 may have an integrated amplifier gain block, in additional to the local oscillator amplifier 208, to counter any signal loss that occurs due to frequency multiplication. The local oscillator frequency multiplier 210 is typically used for generating high frequency local oscillator signals as generating high frequency local oscillator signals with adequate driver power and low-phase noise directly with the signal generation circuit of signal synthesiser 206 may be difficult. A power distribution network 212 divides the output from the local oscillator frequency multiplier 210 to the transmit path 246 or the receive path 250. One requirement of the power distribution network 212 is to ensure that the various signal output ports are isolated from each other, so there is no signal leakage or interference between the transmit and receive elements of the transmit path 246 and the receive path 250. The power distribution network may be a power divider or may be comprised of transmission lines or tracks which can distribute the power.

### Transmit path

The transmit path 246 has four inputs. An in-phase input 202, a quadrature phase input 204, an output from the signal synthesiser 206 and an output from the power distribution network 212. The in-phase input 202 and the quadrature phase input 204 encode the input data for transmission using the frequency-agile transceiver 200 and are received from other components of the device that includes the frequency-agile transceiver 200. A combination of the in-phase input 202 and the quadrature phase input 204 may be referred to as an input transmission signal. The output from the signal synthesiser 206 is received by a local oscillator transmit (Tx) amplifier 214 which increases the power level of the local oscillator signal being delivered to a transmit (Tx) quadrature hybrid 219. The local oscillator Tx amplifier 214 increases the level of the local oscillator signal output from the signal synthesiser 206. The output from the local oscillator Tx amplifier 214 is at a level suitable for an I phase transmit (Tx) radio frequency mixer 216 and a Q phase transmit (Tx) radio frequency mixer 218 to pump, or drive, power needed to create frequency mixing products at outputs of the I phase Tx radio frequency mixer 216 and the Q phase Tx radio frequency mixer 218.

Output from the local oscillator Tx amplifier 214 is received by the transmit (Tx) quadrature hybrid 219 which divides the local oscillator pump in two signals with identical power levels but with a 90-degree phase difference. One output from the Tx quadrature hybrid 219 has a 90-degree phase change and is input to the I phase Tx radio frequency mixer 216, while an output signal with a 180-degree phase change is sent to the Q phase Tx radio frequency mixer 218.

The I phase Tx radio frequency mixer 216 and the Q phase Tx radio frequency mixer 218 use a nonlinear switching element based on transistors, diodes, or any other type of nonlinear element, to mix the in-phase input 202 or the quadrature phase input 204, respectively, with the local oscillator pump frequency from the Tx quadrature hybrid 219. The output from the I phase Tx radio frequency mixer 216 is an upconverted RF signal at frequencies which are sum and difference of the in-phase input 202 and the local oscillator pump signal from the Tx quadrature hybrid 219. The output from the Tx quadrature hybrid 219 is an upconverted RF signal at frequencies which are a sum and difference of the quadrature phase input 204 and the local oscillator pump signal from the Tx quadrature hybrid 219. In addition, various undesirable sum and difference frequencies of the harmonics of in-phase input 202 for the I phase Tx radio frequency mixer 216, or the quadrature phase input 204 for the Tx quadrature hybrid 219, and the local oscillator pump signal from the Tx quadrature hybrid 219 may also generated.

A transmit (Tx) input signal summation circuit 220 rejects either sum or difference frequencies from the I phase Tx radio frequency mixer 216 and the Q phase Tx radio frequency mixer 218. The signal summation circuit can be implemented as an in-phase power combiner or a quadrature-phase power combiner or even a balun. Output from the Tx input signal summation circuit 220 is sent to a transmit (Tx) low/mid frequency intermediate frequency (IF) amplifier 222 that boosts the up-converted RF signal. The output from the Tx low/mid frequency IF amplifier 222 may be referred to as a processed transmission signal.

Output from the Tx low/mid frequency IF (intermediate frequency) amplifier 222 is sent to a transmit element 230 which has an antenna for each of the low/mid frequency transmission path and the high frequency transmission path and receives output from the low/mid frequency mixing stage. The other input received by the transmit element 230 is output from the power distribution network 212, which is the high frequency local oscillator signals described above. The transmit element 230 has a transmit (Tx) RF switch 232 which is a single pole, double throw switch that selects which output to send the processed transmission signal to, either for a high frequency transmission path or a low/mid frequency transmission path. The Tx RF switch 232 enables transmission of the signal in either the low/mid frequency band or high frequency band. The Tx RF switch 232 allows a single transmitter architecture to be used either for low/mid frequency transmission, which has longer link range but lower data rate than high frequency, or high frequency transmission, which has higher data rates, but shorter link range than low/mid frequency transmissions. The Tx RF switch 232 can send an output from the low/mid frequency mixing stage along a low frequency transmission path to transmit the low frequency signal and send the output from the low frequency mixing stage to a high frequency mixing stage for up-converting the output from the low frequency mixing stage with a local oscillator signal when transmitting the high frequency signal of the high frequency transmission path.

When the low/mid frequency transmission path is selected, the processed transmission signal is input to a transmit (Tx) low/mid frequency RF power amplifier chain 234. The Tx low/mid frequency RF PA chain 234 receives the processed transmission signal as a radio frequency signal and amplifies the signal to increase the power level before transmitting the amplified signal via a low/mid frequency transmit (Tx) antenna 236. The Tx low/mid frequency RF PA chain 234 may have a number of amplifier stages and may use a power-amplifier architecture for increased average or back-off efficiency. In other words, the power amplifier architecture may use a Doherty architecture or an envelope-tracking based architecture.

When the Tx RF switch 232 selects the high frequency transmission path, the processed transmission signal from the Tx low/mid frequency IF amplifier 222 is sent to an up-conversion mixer 238. At the up-conversion mixer 238 the processed transmission signal, which is a wideband intermediate frequency low/mid frequency signal, is up converted to a high frequency signal. The up-conversion mixer 238 is a second stage dual-conversion mixer present in the transmit path 246, with the first stage dual conversion mixer being I-Q mixing performed by the I phase Tx radio frequency mixer 216, the Q phase Tx radio frequency mixer 218 and the Tx input signal summation circuit 220. The up-conversion mixer 238 also receives input from the power distribution network 212 and performs a similar function to the I phase Tx radio frequency mixer 216 and the Q phase Tx radio frequency mixer 218.

The output from the up-conversion mixer 238 is sent to a transmit (Tx) high frequency PA chain 240 which amplifies the signal output from the up-conversion mixer 238 to generate sufficient power to meet the power budget requirements for the high frequency transmission path. The Tx high frequency PA chain 240 connects to a high frequency transmit (Tx) antenna 242 to transmit the high frequency signal from the frequency-agile transceiver 200.

### Receive path

The receive path 250 of the frequency-agile transceiver 200 starts with receiving a transmission via a high frequency reception path using a high frequency receive (Rx) antenna 292 or receiving a transmission via a low/mid frequency reception path using a low/mid frequency receive (Rx) antenna 286. The high frequency Rx antenna 292 and the low/mid frequency Rx antenna 286 both form part of a receive element 280 that receives input from either antenna as well as input from the power distribution network 212 of the signal generation chain 248 when using the high frequency reception path. The receive element has an antenna for each of the low/mid frequency reception path and the high frequency reception path. For the low/mid frequency reception path the low/mid frequency Rx antenna 286 sends the received signal to a receive (Rx) low/mid frequency low noise amplifier (LNA) chain 284. The Rx low/mid frequency LNA chain 284 amplifies a low/mid frequency signal, such as a sub-6GHz low/mid-band 5G signal without significantly degrading the signal-to-noise ratio.

The Rx low/mid frequency LNA chain 284 connects to a receive (Rx) radio frequency (RF) switch 282. The Rx RF Switch 282 is similar to the Tx RF switch 232, described above, in that the Rx RF Switch 282 is a single pole, double throw switch that selects between the high frequency reception path and the low/mid frequency reception path. The Tx RF switch 232 sends an output to a low frequency mixing stage and receives input from a low frequency reception path for receiving the low frequency signal or receive an input from a high frequency mixing stage for down-converting the high frequency signal with a local oscillator signal when receiving the high frequency signal of the high frequency reception path.

The high frequency reception path signal is received by the high frequency Rx antenna 292 and sent to a high frequency low noise amplifier (LNA) chain 290 which amplifies the received high frequency signal, such as a high-band mmWave 5G signal, without adding a significant amount of noise. While all amplifiers add some noise to an incoming signal, the high frequency LNA chain 290 amplifies the received signal without significantly degrading the signal-to-noise ratio. The output from the high frequency LNA chain 290 is sent to a down-conversion mixer 288. The down-conversion mixer 288 down converts the frequency of the high frequency reception path from the high frequency Rx antenna 292 and is a first step of a dual-conversion mixing process to demodulate the received high frequency signal to recover and output data. The later stages of the dual-conversion mixing process will be described below. Output from the down-conversion mixer 288 is sent to the Rx RF Switch 282 which takes the down-converted signal from the down-conversion mixer 288 and passes the signal to a receive (Rx) low/mid frequency IF amplifier 272. When the receive element 280 is operating on the low/mid frequency reception path the Rx RF Switch 282 sends output from the Rx low/mid frequency LNA chain 284 to the Rx low/mid frequency IF amplifier 272. The Rx RF Switch 282 selects between the low/mid frequency reception path and the high frequency reception path for demodulation by circuitry down the line and subsequent recovery and output of the data. The Rx low/mid frequency IF amplifier 272 boosts the down-converted signal from the high frequency reception path or the signal from the low/mid frequency reception path.

Output from the Rx low/mid frequency IF amplifier 272 is sent to a receive (Rx) input signal split circuit 270 where the received signal is split to an I phase receive (Rx) radio frequency mixer 266 and a Q phase receive (Rx) radio frequency mixer 268. The I phase Rx radio frequency mixer 266 and the Q phase Rx radio frequency mixer 268 are used when the receive path 250 is using either the low/mid frequency reception path and operating on low/mid frequency signals, or the high frequency reception path and operating on high frequency signals, to remove a carrier wave in the signal to demodulate the signal received either through low/mid frequency path and operating on low/mid frequency signals or the high-frequency reception path and operating on high-frequency signals.. The carrier signal is removed using output from the signal synthesiser 206 that is received by a local oscillator receive (Rx) amplifier 264. The local oscillator Rx amplifier 264 operates in a similar manner to the local oscillator Tx amplifier 214, as described above in relation to the transmit path 246. Output from the local oscillator Rx amplifier 264 is sent to a receive (Rx) quadrature hybrid 269, which operates in a similar manner to the Tx quadrature hybrid 219 of the transmit path 246. A 0 degree output from the Rx quadrature hybrid 269 is received by the I phase Rx radio frequency mixer 266 and a 90 degree output from the Rx quadrature hybrid 269 is received by the Q phase Rx radio frequency mixer 268. The output from the Rx quadrature hybrid 269 is used to remove the carrier frequency from the received signal. The output from the receive path 250 is an in-phase output 252 and a quadrature phase output 254, each of the outputs being I and Q phase signals of the output data from the receive path 250.

The Rx input signal split circuit 270, I phase Rx radio frequency mixer 266, Q phase Rx radio frequency mixer 268 and the local oscillator Rx amplifier 264 are all part of a second stage of the dual-conversion mixing process and form a receiving IQ splitter.

### Signal generation chain operation

One feature of the frequency-agile transceiver 200, as described, is that only one of the signal generation chain 248 outputs is selectively used by the transmit path 246 or the receive path 250. When the transmit path 246 is transmitting using the low/mid frequency transmission path, the low/mid frequency output of the signal generation chain 248 is used as input to the local oscillator Tx amplifier 214. The signal generation chain 248 does not output from the power distribution network 212 to the up-conversion mixer 238. When the high frequency transmission path is used by the transmit path 246 then the low/mid frequency output from the signal generation chain 248 to the local oscillator Tx amplifier 214 is disabled and the high frequency output from the power distribution network 212 to the up-conversion mixer 238 is enabled. Similarly for the receive path 250. If the received signal uses the low/mid frequency receive path, the low/mid band output from the signal generation chain 248 to the local oscillator Rx amplifier 264 is used and the high band output from the power distribution network 212 is disabled. If the millimetre wavelength receive path is used, then the high band output from the power distribution network 212 is used and the low/mid band output from the signal generation chain 248 to the local oscillator Rx amplifier 264 is disabled.

### Beamforming frequency-agile transceiver

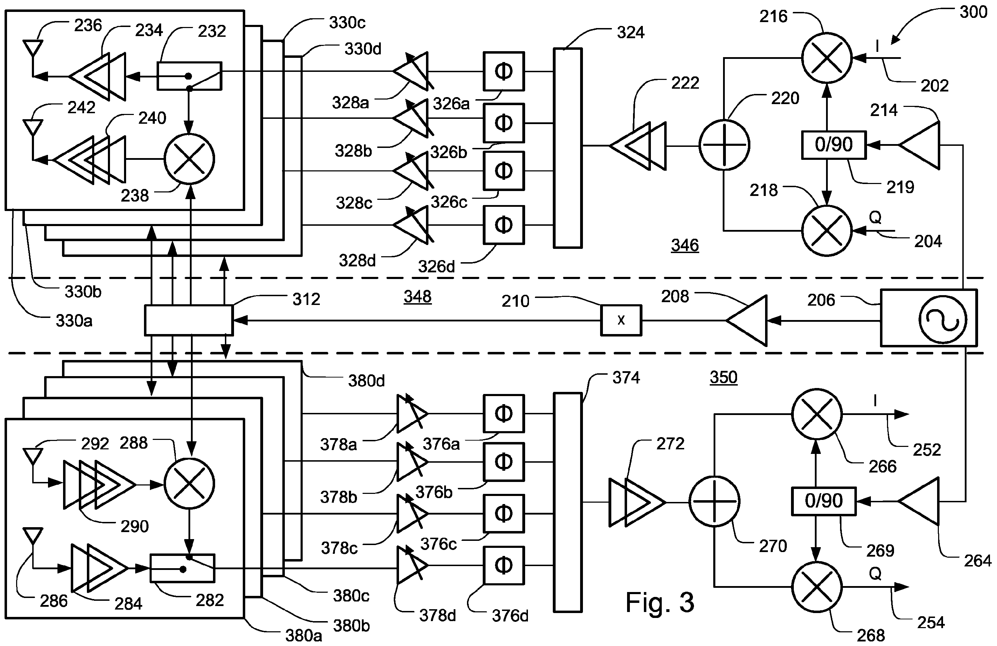

Figure 3 shows a beamforming frequency-agile transceiver 300 which is similar to the frequency-agile transceiver 200 described above in relation to Figure 2, but with modifications to provide beamforming for a transmit path 346 and a receive path 350. The beamforming frequency-agile transceiver 300 can operate at one of two operating frequency bands, such as a low/medium frequency or a high frequency, for the transmit path 346 or one of two operating frequency bands, such as a low/medium frequency or a high frequency, for the receive path 350. The transmit path 346 and the receive path 350 can operate at different frequencies, independently. That is, the operating frequency band of the transmit path 346 does not have to be the same as the operating frequency band of the receive path 350 when the two are in operation at the same time, the same as the frequency-agile transceiver 200.

The beamforming frequency-agile transceiver 300 is shown with four transmitting antennas and four receiving antennas. Many aspects of the beamforming frequency-agile transceiver 300 are common with the frequency-agile transceiver 200 and share common reference numbers for common components.

Beamforming requires multiple transmit, or receive, element, each of which is excited by a signal with a slightly different phase. As the signal from each transmit element is transmitted via a corresponding antenna as each transmit element is an antenna for each of the low/mid frequency transmission path and the high frequency transmission path, the signals from multiple transmit sections, all with unique phases, constructively interfere at a point in space to create a narrow radio beam or signal. In every other direction, the signal wavefronts travelling from the antennas combine destructively, resulting in a signal null. A similar mechanism occurs for the receivers when receiving a signal.

The advantage of beamforming is that the signal can travel further than is possible if the signal were to be transmitted isotopically in space, i.e., the signal is transmitted in all directions simultaneously. In the isotopic transmission case only a small part of the signal is received at the point where the user equipment is, resulting in a diminished signal. In other words, the range of the radio link is substantially reduced using isotopic transmission compared to the range for beamforming transmission.

As stated above, a radio operating based on beamforming requires multiple transmit and receive elements, with the neighbouring transmit and receive sections sharing an antenna. For example, a radio system that supports multiple frequency bands, such as a sub-6GHz 5G band, often referred to as mid-band 5G, around 3.5GHz and a mmWave 5G band, referred to as high band, around 28 GHz. Such a system would require two different radio systems, one for each frequency band, or 2n transmit and receive elements, where 'n' is the number of transmit or receive elements needed to create beamforming. Halving the number of transmit or receive elements can reduce the cost and space occupied by the beamforming elements, while catering for multiple frequency bands. This may be advantageous in systems such as mobile phones, where space is at a premium and separate chipsets or beamforming integrated circuits are needed for multiple frequency bands.

### Signal Generation path

A signal generation chain 348 operates in a similar manner to the signal generation chain 248 described above in that the signal generation chain 348 includes the signal synthesiser 206, the local oscillator amplifier 208 and the local oscillator frequency multiplier 210. The output from the local oscillator frequency multiplier 210 is passed to a power distribution network 312. The power distribution network 312 differs to the power distribution network 212 in that there are four outputs for the transmit path 346 and four outputs for the receive path 350. The power distribution network 312 operates best when the various signal output ports are isolated from each other, so that there is no signal leakage or interference between transmit elements of the transmit path 346, between the receive elements of the receive path 350, or between the transmit and receive elements of the transmit path 346 and the receive path 350. The power distribution network may be a power divider or may be comprised of transmission lines or tracks which can distribute the power.

### Transmit Path

The transmit path 346 receives the in-phase input 202 and the quadrature phase input 204 as described above for the frequency-agile transceiver 200. However, the transmit path 346 differs after the output from the Tx low/mid frequency IF amplifier 222. Instead of going from the Tx low/mid frequency IF amplifier 222 to the transmit element 230, the output from the Tx low/mid frequency IF amplifier 222 goes to a transmit (Tx) power splitter network 324 in the beamforming frequency-agile transceiver 300. The Tx power splitter network 324 divides the input from the Tx low/mid frequency IF amplifier 222 between four paths, also referred to as a beamforming path. The Tx power splitter network 324 is the start of a beamforming signal generator that provides input to the transmit elements and generates the four outputs for the beamforming frequency-agile transceiver 300. In other embodiments, a Tx power splitter network may generate two or more outputs, with an output for each beamforming path. Each path produces a phase and amplitude-level shifted signal to a transmit element. Each output, or line, of the Tx power splitter network 324 connects to one of four transmit digital phase shifters: transmit (Tx) digital phase shifter 1 326a, transmit (Tx) digital phase shifter 2 326b, transmit (Tx) digital phase shifter 3 326c and transmit (Tx) digital phase shifter 4 326d. Each of the transmit phase shifters may be an n-bit digital phase shifter programmed to impart a phase shift to a received signal by means of control signals, not shown. A resolution of each of the transmit phase shifters determines a smallest phase change that is achievable within the allowed phase range. Each of the phase shifters is used by the beamforming frequency-agile transceiver 300 to modify the phase for a transmitted signal to provide the phase shifting component of the beamforming capabilities.

Each path output from one of the transmit digital phase shifters is sent to one of four transmit variable gain amplifiers: transmit (Tx) variable gain amplifier 1 328a, transmit (Tx) variable gain amplifier 2 328b, transmit (Tx) variable gain amplifier 3 328c or transmit (Tx) variable gain amplifier 4 328d. The transmit variable gain amplifiers are used to vary an amplitude for each of the four paths in the transmit path 246 as a beamforming array requires a set of signals with each of the signals having, or at least being capable of, adjustment to the amplitude and phase to create a focussed beam in the far field. Each of the transmit variable gain amplifiers creates the amplitude variation in the signal of each path that is used, with the modified phase, to create a narrow or focussed beam. In the general case, the frequency-agile transceiver has a plurality of variable gain amplifiers, each of the plurality of variable gain amplifiers operating on one of the outputs from a Tx power splitter network.

The phase shifters and the transmit variable gain amplifiers are configured using control signals, not shown. The configuration of the phase shifters and the transmit variable gain amplifiers will vary when the beamforming frequency-agile transceiver 300 is configure to operate on the high frequency transmission path or the low/mid frequency transmission path due to differences in how the different frequency bands are processed. That is, the phase shifters and the transmit variable gain amplifier may have a different configuration when using the low frequency transmission path compared to the high frequency transmission path, where the configuration includes the gain for the transmit variable gain amplifiers and phase for the phase shifters.

One feature of the Tx power splitter network 324 is adequate isolation between the output ports for each path, or line, to reducer or minimise interference between each of the four paths. Any form of interference or cross talk may be detrimental to correct operation of the beamforming frequency-agile transceiver 300 and prevent the transmit elements to form a focussed or directional beam as required for correct beamforming operation. It is also important that the Tx power splitter network 324 does not introduce phase or amplitude distortion between the input from the Tx low/mid frequency IF amplifier 222 and each output to the transmit digital phase shifters. Ideally the input from the Tx low/mid frequency IF amplifier 222 and the outputs to the transmit digital phase shifters have equal phase and amplitude although having a phase and amplitude balance to within a specified limit also allows the transmit path 346 to operate correctly. Limited distortion between the input from the Tx low/mid frequency IF amplifier 222 and output to the transmit digital phase shifter can reduce or minimize additional phase and amplitude calibration for the transmit phase shifters and the transmit variable gain amplifiers respectively.

The beamforming frequency-agile transceiver 300 has four transmit elements, transmit element 1 330a, transmit element 2 330b, transmit element 3 330c and transmit element 4 330d. Each of the transmit elements operates in the same way as described for the transmit element 230 of the frequency-agile transceiver 200. Each of the transmit elements operates on one of the paths, also referred to as lines or beamforming path, from the Tx power splitter network 324. For the transmit element 1 330a the input has a phase set by the Tx digital phase shifter 1 326a and an amplitude set by the Tx variable gain amplifier 1 328a. Each of the transmit elements also receives one of the outputs from the power distribution network 312. Each of the transmit elements has a low/mid frequency transmit (Tx) antenna 236 and a high frequency transmit (Tx) antenna 242. The high frequency Tx antenna 242 is a high-band transmit antenna that allows beamforming and generates a narrowly focused beam directed at user equipment. Some requirements of the high frequency Tx antenna 242 may include high gain, good input return loss, minimal power in the side lobes and a compact size. For the low/mid frequency Tx antenna 236 of the transmit element of the beamforming frequency-agile transceiver 300 a low or mid-band transmit antenna transmits signals with respective phases that will result in a focused beam in the far field. Requirements of the low/mid frequency Tx antenna 236 of the beamforming frequency-agile transceiver 300 may be identical to the low/mid frequency Tx antenna 236 of the frequency-agile transceiver 200, and may also be co-located with high frequency antenna without interference.

Each path, or line, connects a digital phase shifter, a variable gain amplifier and a transmit element, such as the line 1 that has the Tx digital phase shifter 1 326a, the Tx variable gain amplifier 1 328a and the transmit element 1 330a. Similarly for lines 2, 3 and 4.

The transmission path described above, with a plurality of digital phase shifters, such as the Tx digital phase shifter 1 326a, and a plurality of variable gain amplifiers, such as Tx variable gain amplifier 1 328a, enable generation of a narrow beam including the high-frequency signal and a narrow beam including the low-frequency signal. The narrow beams are generated in a far-field of each of at least one antenna of a plurality of transmit elements.

### Receive Path

The receive path 350 receives signals in each of four receive elements: receive element 1 380a, receive element 2 380b, receive element 3 380c and receive element 4 380d. Each of the receive elements operates in the same, or a similar, manner to the receive element 280 described above in relation to the frequency-agile transceiver 200. Each of the receive elements has an antenna for each of the low/mid frequency reception path and the high frequency reception path. Each of the receive elements receives an input from the power distribution network 312 that is used by the down-conversion mixer 288, in the relevant receive element, to remove a carrier wave when receiving on the high frequency reception path of the receive element. Each of the receive elements is connected to a separate path, or line, where the amplitude and the phase is adjusted in a beamforming signal combiner that takes input from the receive elements and provides an output the Rx low/mid frequency IF amplifier 272.

Amplitude adjustment for each path is performed by one of four receive variable gain amplifiers: receive (Rx) variable gain amplifier 1 378a, receive (Rx) variable gain amplifier 2 378b, receive (Rx) variable gain amplifier 3 378c and receive (Rx) variable gain amplifier 4 378d. Each of the receive variable gain amplifiers are similar to the transmit variable gain amplifiers in the transmit path 346 except the orientation of the receive variable gain amplifiers is reversed to take the signal from one of the receive elements as input. The receive variable gain amplifiers may differ to the transmit variable gain amplifiers in terms of some of the operational parameters, such as output power capability and other performance criteria.

The phase adjustment for each path is performed by one of four receive digital phase shifters: receive (Rx) digital phase shifter 1 376a, receive (Rx) digital phase shifter 2 376b, receive (Rx) digital phase shifter 3 376c and receive (Rx) digital phase shifter 4 376d. The receive digital phase shifters are responsible for shifting a signal phase for each path by a specific angle. Each of the receive phase shifters shifts a phase of the received signal for the path by an angle necessary to allow constructive addition of the signal for each path in the receive path 350. Constructive addition is performed in a Rx power combiner network 374. The Rx power combiner network 374 is similar to the Tx power splitter network 324 but combines the signals in each of the four paths from each corresponding receive element, via the receive variable gain amplifiers and the receive digital phase shifters. The Rx power combiner network 374 should have low-loss and isolation between the input ports for each path as well as between the input for each path and out from the Rx power combiner network 374.

As with the transmit path 346, each path, or line, of the receive path 350 connects a receive element, a variable gain amplifier and a digital phase shifter, such as line 1 that has the receive element 1 380a, the Rx variable gain amplifier 1 378a and the Rx digital phase shifter 1 376a. Similarly for lines 2, 3 and 4. In the general case, the frequency-agile transceiver has a plurality of variable gain amplifiers, each of the plurality of variable gain amplifiers operating on one of the outputs from a receive element.

The phase shifters and the receive variable gain amplifiers are configured using control signals, not shown. The configuration of the phase shifters and the receive variable gain amplifiers will vary when the beamforming frequency-agile transceiver 300 is configure to operate on the high frequency reception path or the low/mid frequency reception path due to differences in how the different frequency bands are processed. That is, the phase shifters and the receive variable gain amplifiers may have a different configuration when using the low frequency reception path compared to the high frequency reception path, where the configuration includes the gain for the receive variable gain amplifiers and phase for the phase shifters. When the low/mid frequency reception path and the high frequency transmission path operate at the same time, the phase shifters and the receive variable gain amplifiers may be configured with values to allow operation of the both at the same time.

The Rx power combiner network 374 sends the combined signal to the Rx low/mid frequency IF amplifier 272, with the rest of the receive path 350 operating in a manner as described above in relation to the frequency-agile transceiver 200.
The receive path described above, with a plurality of digital phase shifters, such as the Rx variable gain amplifier 1 378a, and a plurality of variable gain amplifiers, such as the receive element 1 380a, enable reception of a narrow beam including the high-frequency signal and a narrow beam including the low-frequency signal.

### Single Antenna elements

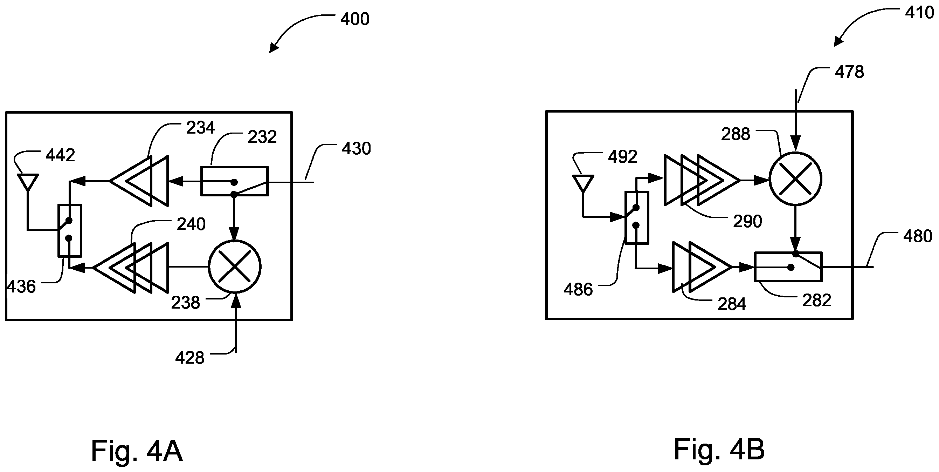

Figures 4A shows a single antenna transmit element 400 that varies from the transmit element 230 and the transmit elements of the beamforming frequency-agile transceiver 300 described above. Some of the components of the single antenna transmit element 400 are the same as used in the transmit element 230 or the transmit elements of the beamforming frequency-agile transceiver 300. The single antenna transmit element 400 receives as input a signal input 430, such as input from the Tx low/mid frequency IF amplifier 222 of fig 2 or input from one of the transmit variable gain amplifiers of the beamforming frequency-agile transceiver 300. The single antenna transmit element 400 also receives a power distribution network input 428, such as from the power distribution network 212 or the power distribution network 312. The signal input 430 and the power distribution network input 428 are processed as part of a high frequency transmission path as described above for the up-conversion mixer 238 and the Tx high frequency PA chain 240. Output from the up-conversion mixer 238 is sent to a transmit (Tx) antenna output switch 436 which is a single-pole double throw (SPDT) RF switch that selects input from a low/mid frequency transmission path or the high frequency transmission path and sends the output to a dual band transmit (Tx) antenna 442. For the low/mid frequency transmission path the signal input 430 is sent via the Tx RF switch 232 and the Tx low/mid frequency RF PA chain 234 to the Tx antenna output switch 436. The single dual band Tx antenna 442 simultaneously supports low/mid frequencies, such as the sub-6GHz frequency band, and the high frequency band such as the mmWave 5G band.

Figure 4B shows a single antenna receive element 410 that varies from the receive element 280 and the receive elements of the beamforming frequency-agile transceiver 300 described above. The main modification is that the single antenna receive element 410 has a single antenna for the low/mid frequency reception path and the high frequency reception path, compared to the dual antenna design of the receive element 280 and the receive elements of the beamforming frequency-agile transceiver 300. The single antenna receive element 410 outputs a signal output 480 to the Rx low/mid frequency IF amplifier 272 of the frequency-agile transceiver 200 or to one of the receive variable gain amplifiers of the beamforming frequency-agile transceiver 300, such as the Rx variable gain amplifier 1 378a. The single antenna receive element 410 has a single dual band receive (Rx) antenna 492 that can receive low/mid frequencies, such as sub-6GHz 5G, or high frequencies, such as mmWave 5G. A high frequency reception path or a low/mid frequency reception path is selected by a receive (Rx) antenna input switch 486, which is a single-pole double throw RF switch. When the Rx antenna input switch 486 selects the low/mid frequency reception path the signal passes from the dual band Rx antenna 492 via the Rx antenna input switch 486 to the Rx low/mid frequency LNA chain 284 to the Rx RF Switch 282 and is then output as the signal output 480. When the Rx antenna input switch 486 selects the high frequency transmission path the signal is received by the dual band Rx antenna 492 and sent, via the Rx antenna input switch 486, to the high frequency LNA chain 290 and the down-conversion mixer 288 where the carrier frequency is removed using a power distribution network input 478. The power distribution network input 478 is the output from the power distribution network 212 or the power distribution network 312. Once the carrier wave has been removed at the power distribution network input 478 the signal is passed through the Rx RF Switch 282 and output as the signal output 480.

The single antenna transmit element 400 and the single antenna receive element 410 may be used in place of the transmit and receive elements of the frequency-agile transceiver 200 or the transmit and receive elements of the beamforming frequency-agile transceiver 300. In one embodiment, the single antenna transmit element 400 has dual-resonance and can simultaneously transmit the high frequency signal and the low-frequency signal. Similarly, the single antenna receive element 410 may have dual-resonance and can simultaneously receive the high frequency signal and the low/mid frequency signal.

### Frequency-agile transceiver process

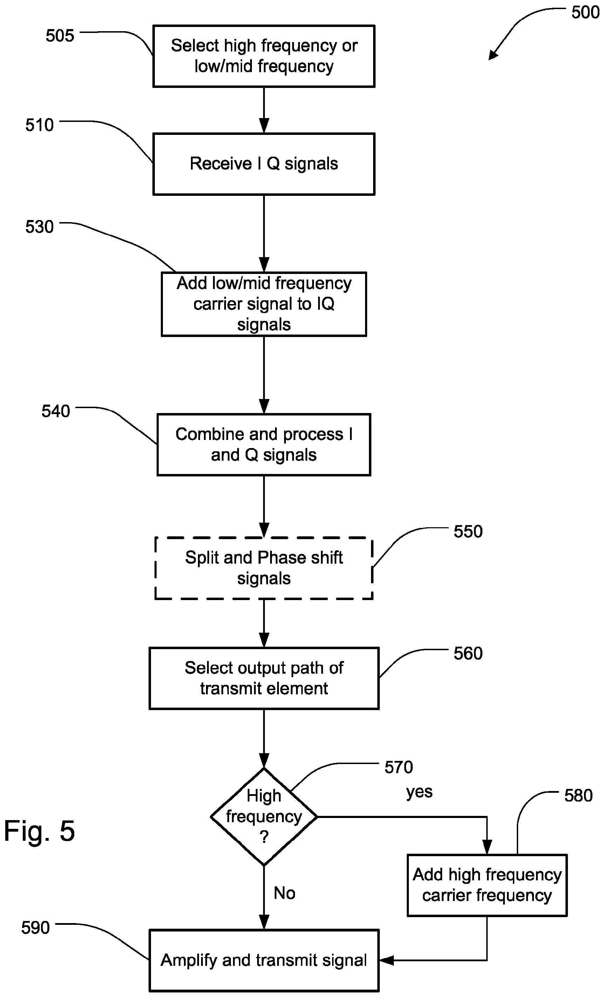

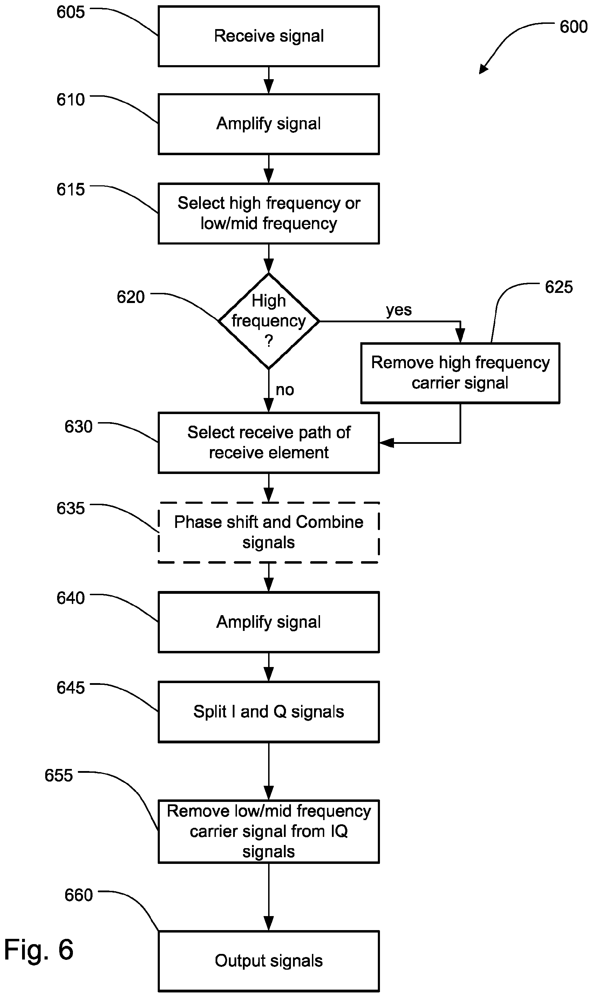

A process for a frequency-agile transmitter and frequency-agile receiver will now be described in relation to Figures 5 and 6. A frequency-agile transmitter process 500 will now be described with reference to Figure 5. The frequency-agile transmitter process 500 may be implemented as a frequency-agile transmitter, such as the transmitter component of the frequency-agile transceiver 200 or the beamforming frequency-agile transceiver 300. The frequency-agile transmitter process 500 starts with a frequency selection 505 where a high frequency or a low/mid frequency path is selected. The frequency selection may occur later, but is required before any of the frequency check steps described below.

At a receive IQ signals 510 the I and Q phases are received such as the in-phase input 202 and the quadrature phase input 204. The IQ signals are the in phase and phase shifted copies of the received data to be transmitted by the frequency-agile transmitter process 500. At an add low/mid frequency carrier 530, the frequency-agile transmitter process 500 adds a low/mid frequency carrier, where a carrier signal, such as output from the signal synthesiser 206, is added to the I and Q phases at the I phase Tx radio frequency mixer 216 and the Q phase Tx radio frequency mixer 218. As described above, the Tx quadrature hybrid 219 adds a phase shift to the output of the signal synthesiser 206 before combining with the Q phase. Next, at a process signal 540 the I and Q phases are combined and amplified as described in relation to Tx input signal summation circuit 220 and Tx low/mid frequency IF amplifier 222 of the frequency-agile transceiver 200 and the beamforming frequency-agile transceiver 300.

At beamforming processing 550 the combined I and Q phase signal from the process signal 540 is split and amplified, in the case of the beamforming frequency-agile transceiver 300. The beamforming processing 550 is an optional step that is used for a beamforming frequency-agile transmitter and is performed by the Tx power splitter network 324, the Tx digital phase shifters, such as the Tx digital phase shifter 1 326a, and the Tx variable gain amplifiers, such as the Tx variable gain amplifier 1 328a. At a select transmit path 560 a RF switch in a transmit element, such as the Tx RF switch 232, selects either the low/mid frequency or high frequency transmit path, based on the selection made at the frequency selection 505. If the high frequency transmit path is selected, then a high frequency check 570 is yes and proceeds to an add high frequency carrier 580 where a high frequency carrier signal, from the power distribution network 312 or the power distribution network 212 is combined, using the up-conversion mixer 238. The signal is then processed by a transmit signal 590 where the signal is amplified and sent to an antenna. If the high frequency check 570 is no, then the frequency-agile transmitter process 500 proceeds to the transmit signal 590.

A frequency-agile receiver process 600 will now be described in relation to figure 6. The frequency-agile receiver process 600 may be performed using a frequency-agile receiver, such the receiver component of the frequency-agile transceiver 200 or the beamforming frequency-agile transceiver 300. The frequency-agile receiver process 600 starts with a receive signal 605 where an antenna receives a transmitted signal. The received signal is amplified at an amplify signal 610, by an amplifier such as the Rx low/mid frequency LNA chain 284 or the high frequency LNA chain 290. At a frequency selection 615 a high frequency path or low/mid frequency path for the frequency-agile receiver is selected. At a high frequency check 620 a check is made to see if the frequency-agile receiver is operating on a high frequency signal. If the frequency-agile receiver is operating on a high frequency signal, the frequency-agile receiver process 600 proceeds to a remove high frequency carrier signal 625 where a high frequency carrier signal, received from a power distribution network, such as the power distribution network 212 or the power distribution network 312, is removed in the down-conversion mixer 288. If the high frequency check 620 determines that the low/mid frequency reception path is selected, the frequency-agile receiver process 600 proceeds to a select receive path 630.

The select receive path 630 operates a RF switch, such as the Rx RF Switch 282, to select between the high frequency reception path or the low/mid frequency reception path. At a beamforming processing 635 the amplified signal from the antenna, for a low/mid frequency signal, or a demodulated high frequency signal, is amplified and phase shifted when beamforming is in use. The amplification, shifting and combining is performed by a variable gain amplifier, such as the Rx variable gain amplifier 1 378a, a digital phase shifter, such as the Rx digital phase shifter 1 376a, and a power combiner network, such as the Rx power combiner network 374. The beamforming processing 635 is an optional step used for beamforming in a frequency-agile receiver where each of the received signals is phase adjusted before being combined.

At amplify signal 640 the signal, being the combined signal for a beamforming frequency-agile receiver or the amplified signal from the amplify signal 610 for a non-beamforming frequency-agile receiver, is amplified by an amplifier such as the Rx low/mid frequency IF amplifier 272.

At a split I and Q signals 645 the output data, in the form of the I and Q signals, is separated, as described for the Rx input signal split circuit 270. Next, a remove low/mid frequency carrier signal 655 removes the carrier signal from the I and Q signals. The removal of the carrier signal is conducted as described in relation to the Rx quadrature hybrid 269, the I phase Rx radio frequency mixer 266 and the Q phase Rx radio frequency mixer 268. After the remove low/mid frequency carrier signal 655 the frequency-agile receiver process 600 proceeds to output the data as I and Q signals at an output IQ signals 660, as described above for the in-phase output 252 and the quadrature phase output 254.

### Frequency-agile transceiver features

The frequency-agile transceiver uses two data mixing stages, with a first data mixing stage, also referred to as low/mid frequency mixing stage, or common mixing stage, being the I phase Tx radio frequency mixer 216, the Q phase Tx radio frequency mixer 218 and the Tx input signal summation circuit 220 for the transmit path, or the I phase Rx radio frequency mixer 266, the Q phase Rx radio frequency mixer 268 and the Rx input signal split circuit 270 for the receive path. For the frequency-agile transmitter, the low low/mid frequency mixing stage combines at least two input signals encoding input data, such as in-phase input 202 and quadrature phase input 204, where the at least two input signals being further combined with a local oscillator signal, such as the output from the Tx quadrature hybrid 219, when transmitting the low frequency signal. For the frequency-agile receiver, the low/mid frequency mixing stage receives output from receive elements, such as the receive element 280 or the receive element 1 380a, and separates out at least two signals encoding data, such as the in-phase output 252 and the quadrature phase output 254. The at least two signals are further separated from a local oscillator signal, such as the output from the Rx quadrature hybrid 269, when receiving a low frequency signal.

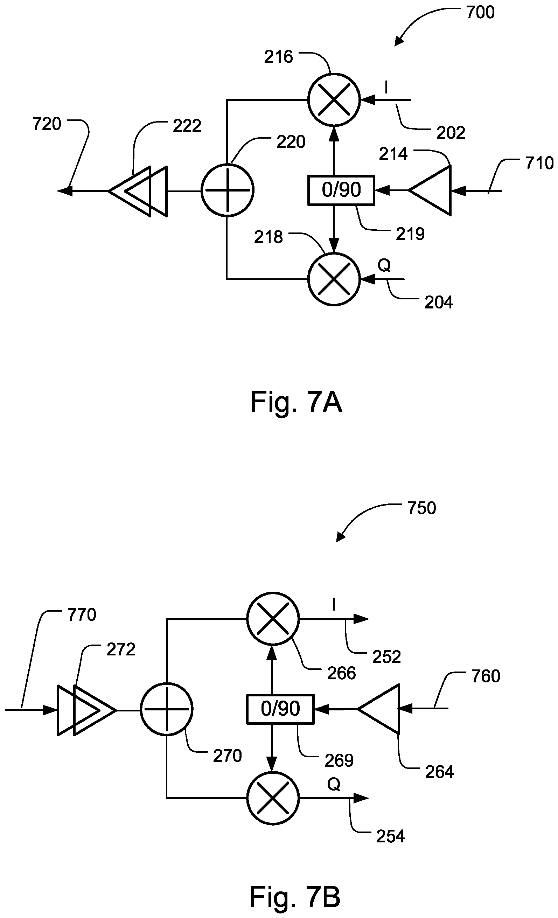

Figures 7A and 7B show the common mixing stage, with Figure 7A showing a transmitter common mixing stage 700 and Figure 7B showing a receiver common mixing stage 750. The transmitter common mixing stage 700 also includes the Tx low/mid frequency IF amplifier 222, while the receiver common mixing stage 750 includes the Rx low/mid frequency IF amplifier 272.

The second data mixing stage, also referred to as high frequency mixing stage, is the up-conversion mixer 238 for the transmit path and the down-conversion mixer 288 for the receive path. The two stage mixing ensures image frequencies, resulting from the mixing process, fall far away from the up or down-converted frequencies of interest, without the need for explicit filters or filtering. For the receive path of the frequency-agile transceiver 200 or the beamforming frequency-agile transceiver 300, components of the low frequency mixing stage and the high frequency mixing stage provide image rejection for the high frequency signals received by the frequency-agile receiver. Note that when the common mixing stage is used for high frequency transmission and reception, the I phase Tx radio frequency mixer 216 and the Q phase Tx radio frequency mixer 218 may not be required. One advantage of the two data mixing stages is that components of the low/mid frequency mixing stage operate outside a frequency region of interest for either of the high frequency transmission path or the high frequency reception path.

Path switching allows the frequency-agile transceiver to switch between the first stage data mixer and allows operation of a low/mid frequency path which can be amplified and sent as an amplified replica of the low/mid-band signal. Path switching allows the low/mid frequency band signal to be sent to an alternative path, which facilitates the second stage of frequency mixing to create an upconverted high frequency band signal, which can be further amplified before being transmitted via a high frequency antenna.

For the reception path, path switching enables the high frequency signal, which has been down-converted to a low frequency signal, to be diverted to the receive path in the direction of the low/mid frequency mixing stage. At the low/mid frequency mixing stage the signal can be down-converted further and the I-Q signals retrieved.

When using the beamforming frequency-agile transceiver 300, a narrow focused beam increases link range and focused beams require a highly-directive antenna array connected to transmit and receive arrays, in which the signals undergo phase shifts and amplitude variation. The phase shift and amplitude variation needed for beamforming are facilitated by the transmit phase shifters, the Tx digital phase shifter 1 326a, Tx digital phase shifter 2 326b, Tx digital phase shifter 3 326c, and the Tx digital phase shifter 4 326d as well as the variable gain amplifiers, the Tx variable gain amplifier 1 328a, Tx variable gain amplifier 2 328b, Tx variable gain amplifier 3 328c, and the Tx variable gain amplifier 4 328d. For the beamforming frequency-agile transceiver 300, there is only one set of phase shifters for the transmit path and one set of phase shifters for the receive path, that is used when the low/mid frequency band signal is active or the high frequency band signal is active. That is, there is a common set of phase shifters for the transmit path and a common set of phase shifters for the receive path.

The frequency-agile transceiver architecture does not include a separate phase shifter in the high frequency transmit or receive paths. Instead, the phase shifting for high frequency signals is performed by the same phase shifter used for low/mid frequency signals. This is because the high frequency signals are down converted to the same frequencies as that of the low/mid frequency path. As a result, both the high frequency and low/mid frequency paths can use the same phase shifters. This may save a considerable amount of physical space on the semiconductor die and reduce path losses, as the phase shifters can have considerable losses necessitating extra amplification, which in turn comes at the expense of increased power consumption. The proposed frequency-agile transceiver architecture comes with the advantage of fewer phase shifters and fewer variable gain amplifiers as both the high frequency signal and the low/mid frequency signals share the same phase shifters and variable gain amplifiers, such as the Tx variable gain amplifier 1 328a.

For efficient operation of the frequency-agile transceiver architecture, the signal bandwidth of the low/mid frequency signal should be at least close to the signal bandwidth of high frequency signal. If not, use of the low/mid frequency signal as means to generate the high frequency signal for the transmit case or use of the high frequency signal to generate the low/mid frequency signal in the receive case may be difficult. When the signal bandwidth needed for the low/mid frequency signal is smaller than required for the signal bandwidth for the high frequency signal, the frequency-agile transceiver architecture will work best when the low/mid frequency transmit or receive paths can support the signal bandwidth of the same size as that of the high frequency signal bandwidth.

### Selectable mode frequency-agile transceivers

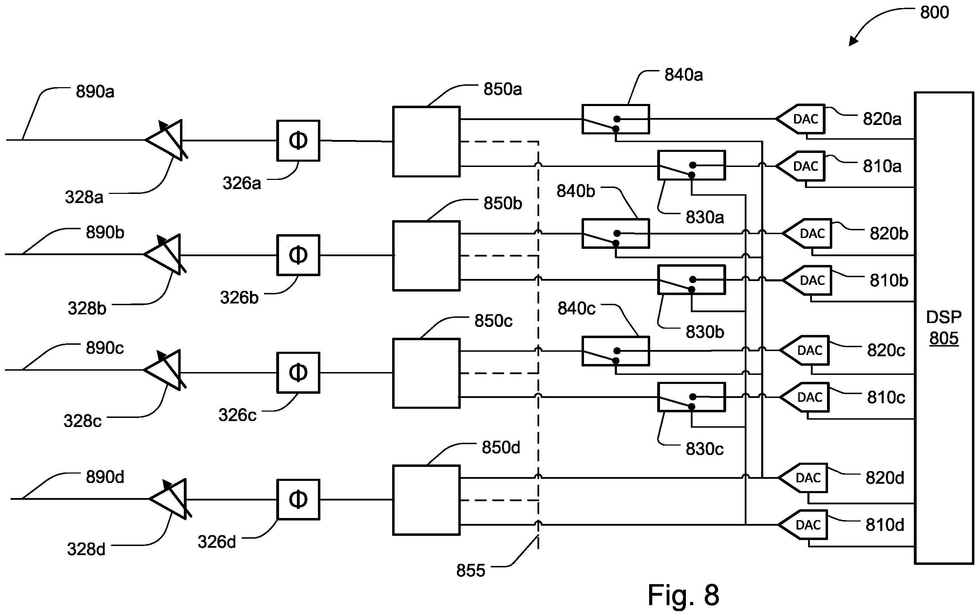

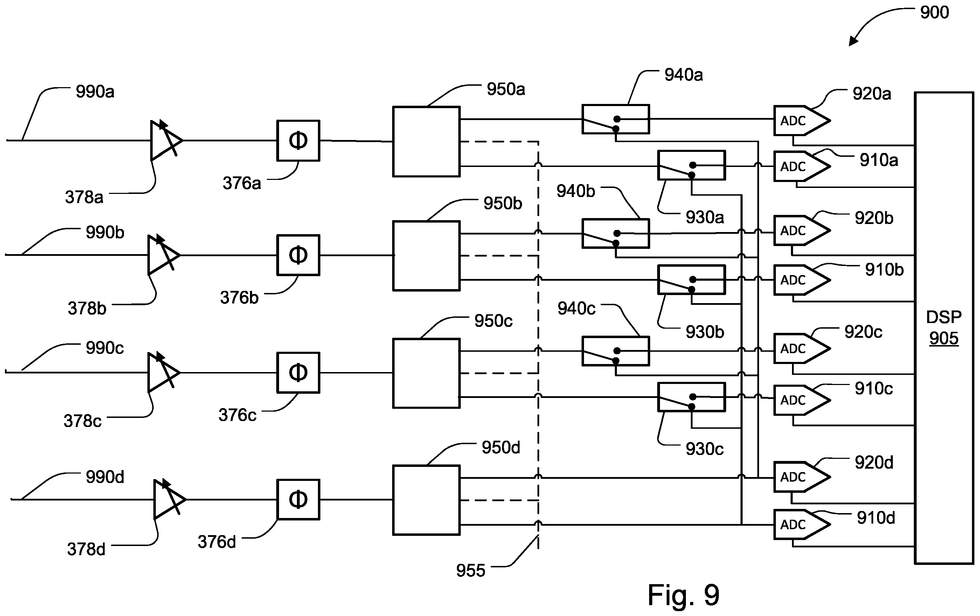

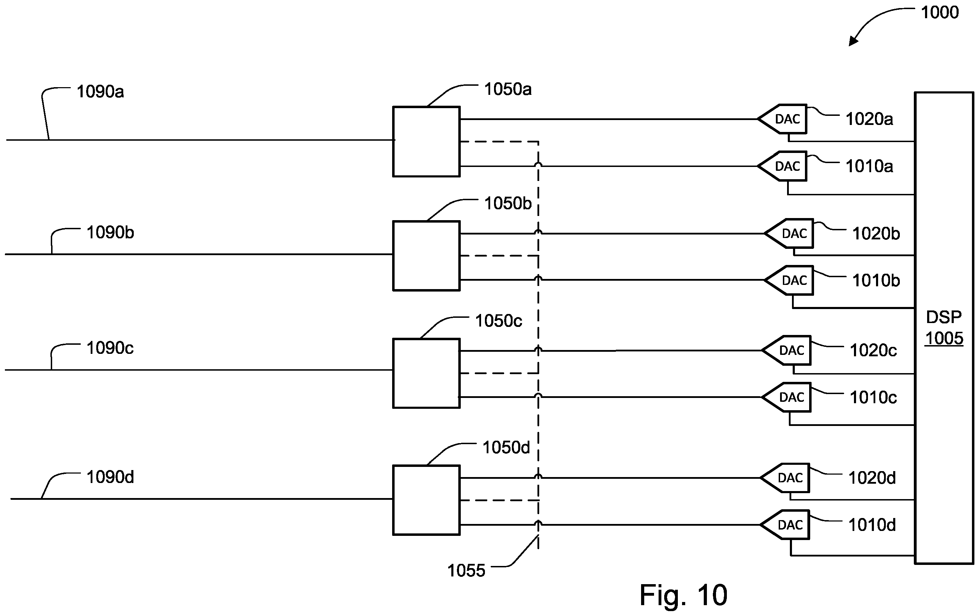

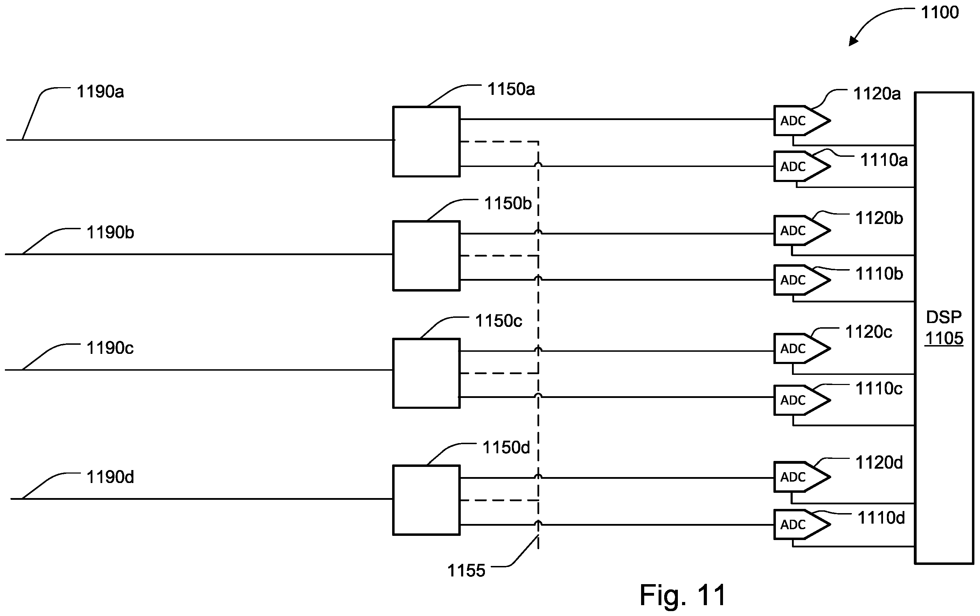

An alternative frequency-agile transceiver will be described in relation to Figure 8, Figure 9, Figure 10 and Figure 11. Figure 8 shows a selectable mode frequency-agile transmitter 800, Figure 9 shows a selectable mode frequency-agile receiver 900, Figure 10 shows an alternative selectable mode frequency-agile transmitter 1000 and Figure 11 shows a alternative selectable mode frequency-agile receiver 1100. The selectable mode frequency-agile transmitter 800, the selectable mode frequency-agile receiver 900, the alternative selectable mode frequency-agile transmitter 1000 and the alternative selectable mode frequency-agile receiver 1100 replace sections of the beamforming frequency-agile transceiver 300 of Figure 3. Not shown in Figures 8, 9, 10 and 11 are the transmit elements, such as the transmit element 1 330a or the receive elements, such as the receive element 1 380a.

The selectable mode frequency-agile transmitter 800, the selectable mode frequency-agile receiver 900, the alternative selectable mode frequency-agile transmitter 1000 and the alternative selectable mode frequency-agile receiver 1100 may be used as part of a selectable mode frequency-agile transceiver that operates in four modes. The four modes are a high frequency beamforming mode, a low/mid frequency beamforming mode, a high frequency MIMO mode and a low/mid frequency MIMO mode. The components shown in Figures 8, 9, 10 and 11 operate in two modes: beamforming mode and MIMO mode. The configuration of the selectable mode frequency-agile transmitter 800, the selectable mode frequency-agile receiver 900, the alternative selectable mode frequency-agile transmitter 1000 and the alternative selectable mode frequency-agile receiver 1100 in the high frequency and low/mid frequency beamforming modes or high frequency and low/mid frequency MIMO modes is provided by at least the signal controllers Tx RF switch 232 or Rx RF Switch 282.

The high frequency beamforming mode provides a transmitter or receiver capable of beamforming high frequency band signal (through intermediate frequency beamforming). Transmit beamforming takes place with I and Q data signals generated from one DAC (digital to analog converter) for the I phase and one DAC for the Q phase, with the analog signal sent on multiple lines, each line having a common mixing stage before being phase and amplitude adjusted and sent to a transmit element. The phase and amplitude settings may differ for each line to implement beamforming. A single DAC is used for the I phase signal and another DAC for the Q phase signal of the transmitter. The output of the transmit element, such as transmit element 1 330a, is set to the mmWave or high-band path using the Tx RF switch 232.

For the receiver, multiple lines process the received signal. Each line has a receive element, one of multiple receive elements the receives the signals. Next the output from the receive element is phase and amplitude adjusted and sent to a receiver common mixing stage. The output from the receiver common mixing stage for each line is sent to one of two ADCs (analog to digital converters), with an ADC for the I phase and an ADC for the Q phase. The receive elements, such as receive element 1 380a, are set to the millimeter wavelength or high frequency band path using the Rx RF Switch 282.

Low/mid frequency beamforming mode, or just low frequency beamforming mode, provides beamformed low/mid frequency band signals. The low/mid frequency beamforming mode operates similar to the high frequency beamforming mode, however the signal controller Tx RF switch 232, or the Rx RF Switch 282, is set to the low/mid frequency band path as described above.

The MIMO mode provides MIMO (multiple-input and multiple-output) where the I and Q signals, or data streams, input to the selectable mode frequency-agile transmitter contain MIMO pre-coding. The MIMO pre-coding attempts to ensure that channel distortion and impairments are minimised so as to improve signal fidelity and signal-to-noise ratio at the receiver. The MIMO precoding is set at low/mid frequency band/intermediate frequency with a fixed phase and constant gain for each line. All lines have the same, or identical, phase for the Tx digital phase shifters, or the Rx digital phase shifters, and the same, or identical, gain settings for the Tx variable gain amplifiers, or the Rx variable gain amplifiers. The Tx RF switch 232, or Rx RF Switch 282, is set to operate on the low/mid frequency band path when operating in the low/mid frequency (low frequency) MIMO mode. The Tx RF switch 232, or Rx RF Switch 282, is set to operate on the high frequency band path when operating in the high frequency MIMO mode. When operating in the beamforming mode, each line may have different, or independent, phase and gains.

The selectable mode frequency-agile transmitter 800 can operate in a beamforming or a MIMO mode. The selectable mode frequency-agile transmitter 800 shows a replacement for part of the transmit path 346 of the beamforming frequency-agile transceiver 300. There are 4 lines in the selectable mode frequency-agile transmitter 800, with components labelled a, b, c and d. Each line can generate a signal for beamforming or an output in MIMO mode.

The input part of the selectable mode frequency-agile transmitter 800 uses a digital signal processor 805 to provide clock signals to DACs (digital to analog converts). There are four Q phase DACs: Q phase DACs 810a, 810b, 810c and 810d. There are also four I phase DACs: I phase DACs 820a, 820b, 820c and 820d. Each line has a Q phase DAC and an I phase DAC.

In MIMO mode, each of the Q phase DACs receive a Q phase input, similar to the quadrature phase input 204, as well as a clock signal from the digital signal processor 805. Similarly, the I phase DACs receive I phase input, similar to the in-phase input 202. The I and Q phase input may also be differential pairs, with I+, I- and Q+, Q-. That is, in MIMO mode, each line has a separate signal input of I and Q phase. In beamforming mode, only the Q phase digital to analog converter 810d and the I phase digital to analog converter 820d are operational and the outputs are used for the a, b and c lines, as well as for the d line. In beamforming mode, each line receives the same input for the I and Q phases.

The selectable mode frequency-agile transmitter 800 uses switches to change operation between beamforming mode and MIMO mode. There are three Q phase MIMO/beamforming switches 830a, 830b and 830c and three I phase MIMO/beamforming switches 840a, 840b and 840c. These switches may be referred to as mode switches. The I and Q phase switches are used to select different inputs when in MIMO mode or beamforming mode. Output from the I phase and Q phase switches are sent to transmitter common mixing stages 850a, 850b, and 850c while the output from Q phase digital to analog converter 810d and I phase digital to analog converter 820d are passed directly to transmitter common mixing stage 850d.

Of the four lines, the d line receives input of two input signals I and Q phase. The remaining lines, a, b, and c are switchable between the two input signals, I and Q phase from Q phase digital to analog converter 810d and I phase digital to analog converter 820d, in beamforming mode, and separate MIMO input signals for MIMO mode. The separate MIMO input signals are from the Q phase digital to analog converter 810a, I phase digital to analog converter 820a, Q phase digital to analog converter 810b, I phase digital to analog converter 820b and the Q phase digital to analog converter 810c and the I phase digital to analog converter 820c.

Each of the transmitter common mixing stages also receive local oscillator input 855, which shows the input from the signal synthesiser 206. The transmitter common mixing stages 850a, 850b, 850c and 850d are each a common mixing stage, as described for the transmitter common mixing stage 700.

When operating in the MIMO mode, the selectable mode frequency-agile transmitter 800 uses all of the Q phase DACs 810a, 810b, 810c and 810d and the I phase DACs 820a, 820b, 820c and 820d. The output from the I phase digital to analog converter 820a passes through an I phase MIMO/beamforming switch 840a to the transmitter common mixing stage 850a. However, in beamforming mode, the transmitter common mixing stage 850a receives input from the I phase digital to analog converter 820d. The result is that, in MIMO mode, all Q phase DACs 810a, 810b, 810c and 810d and I phase DACs 820a, 820b, 820c and 820d are used. In beamforming mode, the output from the Q phase digital to analog converter 810d and I phase digital to analog converter 820d are input to each of the transmitter common mixing stages 850a, 850b, 850c and 850d. The unused DACs may be unpowered when operating in beamforming mode.

Output from the transmitter common mixing stages 850a, 850b, 850c and 850d is sent to the phase shifters, Tx digital phase shifters 326a, 326b, 326c and 326d and then to the amplifiers, Tx variable gain amplifiers 328a, 328b, 328c and 328d. The output from the Tx variable gain amplifiers is sent to transmit element inputs 890a, 890b, 890c and 890d.

In the selectable mode frequency-agile transmitter 800, line a has input from the Q phase digital to analog converter 810a and the I phase digital to analog converter 820a and output to the transmit element input 890a. Line b has input from the Q phase digital to analog converter 810b and the I phase digital to analog converter 820b and output to the transmit element input 890b. Line c has input from the Q phase digital to analog converter 810c and the I phase digital to analog converter 820c and output to the transmit element input 890c. Line d has input from the Q phase digital to analog converter 810d and the I phase digital to analog converter 820d and output to the transmit element input 890d.

In a variation of the selectable mode frequency-agile transmitter 800, a bypass is used to bypass phase shifters, the Tx digital phase shifters 326a, 326b, 326c and 326d, the amplifiers, the Tx variable gain amplifiers 328a, 328b, 328c and 328d, or bother the phase shifters and the variable gain amplifiers when in MIMO mode. Bypassing the phase shifters, the amplifiers or both the phase shifters and the amplifiers reduces signal loss and saves power.

The selectable mode frequency-agile transmitter 800 provides a single transmitter that can operate in high frequency band beamforming mode, low/mid frequency band beamforming mode or MIMO mode. In alternative examples, the selectable mode frequency-agile transmitter 800 may a different number of lines, such as 2, 3, 5, 6, 7, 8, etc.

Figure 9 shows a selectable mode frequency-agile receiver 900 that can operate in a beamforming mode or a MIMO mode. The selectable mode frequency-agile receiver 900 shows a replacement for part of the receive path 350 of the beamforming frequency-agile transceiver 300. There are 4 lines in the selectable mode frequency-agile receiver 900, with components labelled a, b, c and d.

The selectable mode frequency-agile receiver 900 receives output from receive elements, such as the receive element 1 380a as receive element outputs 990a, 990b, 990c and 990d. Output from the receive elements is sent to amplifiers, the Rx variable gain amplifiers 378a, 378b, 378c and 378d, and sent to phase sifters, the Rx digital phase shifters 1 376a, 376b, 376c and 376d, as described above in relation to the receive path 350. The output from the Rx digital phase shifters 1 376a, 376b, 376c and 376d is sent to receiver common mixing stages 950a, 950b, 950c and 950d. Each of the receiver common mixing stages 950a, 950b, 950c and 950d also receives a local oscillator input 955, such as the output from the signal synthesiser 206 of the beamforming frequency-agile transceiver 300. When operating in beamforming mode, the Rx variable gain amplifiers 378a, 378b, 378c and 378d and the Rx digital phase shifters 1 376a, 376b, 376c and 376d may be individually configured, with different, or independent, gains and phase shifts for each line. When operating in MIMO mode, the Rx variable gain amplifiers 378a, 378b, 378c and 378d and the Rx digital phase shifters 1 376a, 376b, 376c and 376d have the same, or identical, value for gain and phase shift for each line.

Each the receiver common mixing stages 950a, 950b, 950c and 950d output I phase and Q phase outputs. The I phase output of the receiver common mixing stage 950a, receiver common mixing stage 950b and the receiver common mixing stage 950c are sent to I phase MIMO/beamforming switches 940a, 940b and 940c, respectively. The Q phase output of the receiver common mixing stage 950a, receiver common mixing stage 950b and the receiver common mixing stage 950c are sent to the Q phase MIMO/beamforming switches 930a, 930b and 930c, respectively. The I phase output from the receiver common mixing stage 950d is sent directly to an I phase analog to digital converter 920d and the Q phase output is sent directly to Q phase analog to digital converter 910d.

The I phase MIMO/beamforming switches 940a, 940b and 940c and the Q phase MIMO/beamforming switches 930a, 930b and 930c select between beamforming mode and MIMO mode. When MIMO mode is selected, the output of the MIMO/beamforming switches is sent to individual ADCs (analog to digital converters). The I phase MIMO/beamforming switches 940a, 940b and 940c are sent to I phase analog to digital converter 920a, I phase analog to digital converter 920b and I phase analog to digital converter 920c, respectively. The outputs from the Q phase MIMO/beamforming switches 930a, 930b and 930c are sent to Q phase analog to digital converter 910a, Q phase analog to digital converter 910b and Q phase analog to digital converter 910c respectively. In beamforming mode, the output from the Q phase MIMO/beamforming switches 930a, 930b and 930c are combined and sent to a Q phase analog to digital converter 910d and the I phase MIMO/beamforming switches 940a, 940b and 940c are combined and sent to an I phase analog to digital converter 920d. When operating in beamforming mode, the MIMO ADC, Q phase analog to digital converter 910a, Q phase analog to digital converter 910b, Q phase analog to digital converter 910c, I phase analog to digital converter 920a, I phase analog to digital converter 920b and I phase analog to digital converter 920c are not used and may be powered off.

As described above, the selectable mode frequency-agile receiver 900 has multiple lines, a first of the multiple lines, the d line, outputs the I phase and Q phase, two signals. The remaining lines, a, b and c, are switchable between outputting the two signals, when operating in beamforming mode, and outputting separate MIMO output signals, to I phase ADCs 920a, 920b, and 920c and to Q phase ADCs 910a, 910b, and 910c. When operating in beamforming mode, the signal of the four lines combine to generate a single output. When operating in MIMO mode, four separate outputs are produced. As stated above. The ADCs for the remaining lines may be powered off when in beamforming mode.

Each of the Q phase ADCs 910a, 910b, 910c and 910d and I phase ADCs 920a, 920b, 920c and 920d receives a clock input from a digital signal processor 905 and outputs a I or Q phase output. While selectable mode frequency-agile receiver 900 is described in terms of I and Q phase, differential outputs may also be used with I+, I- and Q+, Q-. The signal outputs from the Q phase ADCs 910a, 910b, 910c and 910d and the I phase ADCs 920a, 920b, 920c and 920d are not shown.

In the selectable mode frequency-agile receiver 900, line a receives input from the receive element output 990a and outputs to the I phase analog to digital converter 920a and the Q phase analog to digital converter 910a. Line b receives input from the receive element output 990b and outputs to the I phase analog to digital converter 920ba and the Q phase analog to digital converter 910b. Line c receives input from the receive element output 990c and outputs to the I phase analog to digital converter 920c and the Q phase analog to digital converter 910c. Line d receives input from the receive element output 990d and outputs to the I phase analog to digital converter 920d and the Q phase analog to digital converter 910d.

In a variation of the selectable mode frequency-agile receiver 900, a bypass is used to bypass the amplifiers, the Rx variable gain amplifiers 378a, 378b, 378c and 378d, the phase sifters, the Rx digital phase shifters 1 376a, 376b, 376c and 376d, or both the amplifiers and the phase shifters when in MIMO mode. Bypassing the phase shifters, the amplifiers or both the phase shifters and the amplifiers reduces signal loss and saves power. In alternative examples, the selectable mode frequency-agile receiver 900 may a different number of lines, such as 2, 3, 5, 6, 7, 8, etc.

Figure 10 shows an alternative selectable mode frequency-agile transmitter 1000. The selectable mode frequency-agile transmitter 1000 operates in a similar manner to the selectable mode frequency-agile transmitter 800, described above, with a difference in operation occurring in beamforming mode. For the selectable mode frequency-agile transmitter 800 operating in beamforming mode, the I and Q phase output from the Q phase digital to analog converter 810d and the I phase digital to analog converter 820d were also sent to the a, b and c lines. For the selectable mode frequency-agile transmitter 1000, phase shifting and amplification are conducted before, or by the DACs. Each line can have different, or independently adjustable, phase and gain. In the selectable mode frequency-agile transmitter 1000, each line has separate DACs that are used in both the MIMO mode and the beamforming mode.

The selectable mode frequency-agile transmitter 1000 has Q phase DACs 1010a, 1010b, 1010c and 1010d and I phase DACs 1020a, 1020b, 1020c and 1020d. The DACs have a clock signal sent from a digital signal processor 1005. Each line has a transmitter common mixing stages 1050a, 1050b, 1050c and 1050d that implements the transmitter common mixing stage 700 of Figure 7A. A local oscillator input 1055 is input to each of the transmitter common mixing stages 1050a, 1050b, 1050c and 1050d. Output from each of the transmitter common mixing stages 1050a, 1050b, 1050c and 1050d is a transmit element inputs 1090a, 1090b, 1090c and 1090d.

In Figure 10 the a line has input from the Q phase DAC 1010a and the I phase DAC 1020a and output to the transmit element input 1090a. The b line has input from the Q phase DAC 1010b and the I phase DAC 1020b and output to the transmit element input 1090b. The c line has input from the Q phase DAC 1010c and the I phase DAC 1020c and output to the transmit element input 1090c. The d line has input from the Q phase DAC 1010d and the I phase DAC 1020d and output to the transmit element input 1090d.

The alternative selectable mode frequency-agile transmitter 1000 is a selectable mode frequency-agile transmitter that can transmit in a mode selected from the set consisting of a MIMO mode and a beamforming mode. The selectable mode frequency-agile transmitter further comprises a plurality of lines, each of the plurality of lines having identical phase when in MIMO mode and different, or independent, phase when in beamforming mode. In alternative examples, the alternative selectable mode frequency-agile transmitter 1000 may a different number of lines, such as 2, 3, 5, 6, 7, 8, etc.

Figure 11 show an alternative selectable mode frequency-agile receiver 1100. The alternative selectable mode frequency-agile receiver 1100 operates in a similar manner to the selectable mode frequency-agile receiver 900, described above, with a difference in the operation occurring in the beamforming mode. For the selectable mode frequency-agile receiver 900 operating in beamforming mode, I and Q phase output from the receiver common mixing stages 950a, 950b, and 950c are sent to the Q phase analog to digital converter 910d and the I phase analog to digital converter 920d. For the alternative selectable mode frequency-agile receiver 1100, the phase shifting and amplification are conducted after, or by, the ADCs. Each line can have different, or independently adjustable, phase and gain. In the alternative selectable mode frequency-agile receiver 1100, each line has separate ADCs that are used in both the MIMO mode and the beamforming mode.

The alternative selectable mode frequency-agile receiver 1100 has receive element outputs 1190a, 1190b, 1190c and 1190d that are connected to receiver common mixing stages 1150a, 1150b, 1150c and 1150d. Each of the receiver common mixing stages 1150a, 1150b, 1150c and 1150d receive a local oscillator input 1155, similar to the local oscillator input 955. Output from each of the receiver common mixing stages 1150a, 1150b, 1150c and 1150d are I and Q phase output that is sent to I phase ADCs 1120a, 1120b, 1120c and 1120d and Q phase ADCs 1110a, 1110b, 1110c and 1110d respectively.

In Figure 11 the a line receives an input from the receive element output 1190a and outputs to the Q phase ADC 1110a and the I phase ADC 1120a. The b line receives an input from the receive element output 1190b and outputs to the Q phase ADC 1110b and the I phase ADC 1120b. The c line receives an input from the receive element output 1190c and outputs to the Q phase ADC 1110c and the I phase ADC 1120c. The d line receives an input from the receive element output 1190d and outputs to the Q phase ADC 1110d and the I phase ADC 1120d.

The alternative selectable mode frequency-agile receiver 1100 is a selectable mode frequency-agile receiver that can receive in a mode selected from the set consisting of a MIMO mode and a beamforming mode. The selectable mode frequency-agile receiver further comprises the plurality of lines, each of the plurality of lines having identical phase when in MIMO mode and different, or independent, phase when in beamforming mode. In alternative examples, the alternative selectable mode frequency-agile receiver 1100 may a different number of lines, such as 2, 3, 5, 6, 7, 8, etc.

### Variations

The frequency-agile transceivers described above have been described in transmitter and receiver pairs. While operating in such pairs is advantageous to allow bidirectional communication between devices, such as mobile handset and a base station, the frequency-agile transceiver 200 and the multi-beam frequency-agile transceiver 300 may be modified to operate as either a standalone transmitter, using the transmit path 246 and the transmit connections of the signal generation chain 248 for the frequency-agile transceiver 200, or as a standalone receiver using the receive path 250 and the receive connection of the signal generation chain 248 for the frequency-agile transceiver 200.

As described above, the low/mid frequency band may be a sub-6GHz frequency band with frequencies that are less than 6GHz, or FR1 bands which are less than 6GHz that form part of the 5G standard for mobile communications. High frequency may be millimetre wavelength (mmWave) and may include a frequency range between 30 and 300GHz or more specifically to high-band or millimetre wavelength frequencies (FR2 bands > 24-30 GHz, 37-40GHz and >50GHz) that form part of the 5G standard for mobile communications. Other high frequency and low/mid frequency combinations are also possible.

The beamforming frequency-agile transceiver 300 shows four transmit and receive elements as an example number. Alternatives may use 2, 6, 8 or some other number of transmit and receive elements. Each transmit and receive element will have a corresponding phase shifter and variable gain amplifier, such as the Tx variable gain amplifier 1 328a and the Tx digital phase shifter 1 326a for the transmit path 346, or the Rx variable gain amplifier 1 378a and the Rx digital phase shifter 1 376a for the receive path 350. If there were 'n' transmit elements and 'n' receive elements, there will be 'n' phase shifters and 'n' variable gain amplifiers for the transmit path and receive path respectively. The value of 'n' may be an arbitrary number greater than 4, such as 6, 8 and so on. One limiting factor to the number of elements is how many can fit physically inside a single die. Further, for each transmit element and receive element, there needs to be a corresponding antenna element, a phase shifter, a variable-gain amplifier etc. In one example, the antenna element may be shared between a transmit and receive element

The Tx low/mid frequency RF PA chain 234 and the Tx high frequency PA chain 240 may take the form of generic single-ended power amplifiers with unchanging or constant loads or may take the form of high-efficiency architecture such as a Doherty power amplifier, where the loads of the constituent power amplifiers (within the Doherty) are changing. The Tx low/mid frequency RF PA chain 234 and the Tx high frequency PA chain 240 may take the form of power amplifiers, whose efficiency across the power levels are backed-off from maximum output power and is maintained by architecture that resembles an envelope-tracking amplifier etc.

The signal synthesiser 206 of the frequency-agile transceiver 200 and the beamforming frequency-agile transceiver 300 may be based on either a phase-lock loop or an RF oscillator. The signal synthesiser 206 may be a single signal source supplying the reference local oscillator signal for both the first stage dual conversion mixer for the transmit paths and the receive paths and the second stage of dual-conversion mixing in the high frequency transmission path or the high frequency reception path.

The signal synthesiser 206 source can be split into two independent signal generators or signal sources, each providing the reference local oscillator signals for the low/mid frequency transmit or receive paths and the high frequency transmit or receive paths. There is no requirement that either of these split (or independent) reference local oscillator signals must generate identical frequencies and, in practise, the frequencies generated by these split or independent signal sources are more likely to be different.

The amplifiers or amplification blocks, such as local oscillator amplifier 208, local oscillator Tx amplifier 214, local oscillator Rx amplifier 264, Tx low/mid frequency IF amplifier 222 and Rx low/mid frequency IF amplifier 272 may ensure adequate signal is available to drive the subsequent circuit in the architecture and in some cases, depending on the level of the input signal or based on the output power required, can be considered optional.

The baseband signals for the frequency-agile transceiver are in the form of in-phase 'I' and quadrature-phase 'Q' signals. Each I and Q signal can themselves be differential signals denoted by I+ and I- and Q+ and Q- respectively.

The local oscillator frequency multiplier 210 is optional. In one alternative, the signal synthesiser 206 may be split into two different signal generators, with one signal generator providing a local oscillator signal for high frequency paths for the second stage of dual-conversion mixing, and another signal generator providing a local oscillator signal for the low/mid frequency paths for the first stage dual conversion mixer. If the signal from the signal generator to the up-conversion mixer 238, or down-conversion mixer 288, is a high frequency signal, there is no need for the local oscillator frequency multiplier 210 and the local oscillator frequency multiplier 210 can be considered optional.

In one embodiment, additional high frequency band paths may be added to the frequency-agile transceiver, such as the frequency-agile transceiver 200 or the beamforming frequency-agile transceiver 300. An additional high frequency transmission path may be added to the transmit elements of the frequency-agile transceiver 200 or the beamforming frequency-agile transceiver 300. When adding a high frequency transmission path, the Tx RF switch 232 is changed to a suitable switch, such as a single pole, triple throw to select between three transmission paths of a low/mid frequency transmission path, a first high frequency transmission path and a second high frequency transmission path. Each of the high frequency transmission paths have an up-conversion mixer, like up-conversion mixer 238, which receives input from a power distribution network, such as the power distribution network 212 or the power distribution network 312. Each high frequency transmission path will also have a Tx high frequency PA chain, like the Tx high frequency PA chain 240 and may each be connected to a high frequency Tx antenna like the high frequency Tx antenna 242. As described above, in relation to the single antenna transmit element 400, the transmission paths may use a common antenna. Each of the additional high frequency transmission paths, such as a second high frequency transmission path, carry an addition high frequency signal, such as a second high frequency signal, that is output by at least one antenna.

Similarly, additional reception paths may be added to the receive elements of the frequency-agile transceiver 200 or the beamforming frequency-agile transceiver 300. When adding high frequency reception paths, the Rx RF Switch 282 is changed to a suitable switch, such as a single pole, triple throw to select between three reception paths of a low/mid frequency reception path, a first high frequency reception path and a second high frequency reception path. Each of the reception paths have a high frequency LNA chain, like the high frequency LNA chain 290, which receives input from an antenna like the high frequency Rx antenna 292. Output from the high frequency LNA chain connects to a down-conversion mixer, like the down-conversion mixer 288, which also receives input from a power distribution network, such as the power distribution network 212 or the power distribution network 312. As described above, in relation to the single antenna receive element 410 of figure 4B, a common antenna may be used for all reception paths. Each of the additional high frequency reception paths, such as a second high frequency reception path, receive an addition high frequency signal, such as a second high frequency signal, from at least one antenna.

While the frequency-agile transceiver 200 and the beamforming frequency-agile transceiver 300 are described as transmitting and receiving either the low/mid frequency band or the high frequency band, it is also possible to transmit the low/mid frequency band and the high frequency band at the same time, and/or receive the low/mid frequency band and the high frequency band at the same time. A signal controller, such as the Tx RF switch 232 and/or the Rx RF Switch 282 are replaced with a splitter or a coupler and output, or receive, the low/mid frequency bands and the high frequency bands at the same time.

### Advantages and Interpretations

The described frequency-agile transceiver architecture which supports multi frequency-band applications, is highly beneficial for applications such as small-cell or macro base-stations and mobile phones. The frequency-agile transceiver architecture may be beneficial in having a single integrated radio transceiver (transmit and receive functions), which can simultaneously or sequentially transmit/receive signals across multiple bands, such as FR1/FR2 in 5G or FR2 in 5G in conjunction with WiFi frequency bands. This is particularly useful in equipment such as mobile handsets, where separate modules are needed to support different bands of the same communication standard (such as 5G) or different bands across two different standards (such as mmWave 5G + WiFi). Housing transmit/receive functions for two different bands or two different communication standards within the same chip results in reduced space, weight and thermal dissipation and cost of the bill of materials. Furthermore, in communication standards such as 5G, telecommunication operators employ carrier aggregation, whereby part of the data is transmitted across non-contiguous bands. Carrier aggregation results in effective use of spectrum resource and the frequency-agile transceiver architecture may provide a single radio or radio transmitter and/or radio receiver which can effectively handle the data that has been divided and sent over different bands of the frequency spectrum. Carrier aggregation is a common approach in 4G and requires some technological advances to be fully utilised in 5G systems, where a radio might be transmitting at low/mid-band 5G (FR1) and high-band 5G (FR2).

A radio transceiver that can support multiple frequency bands that are spaced decades apart or even octaves apart can also lead to more compact and energy-efficient products that can simultaneously support multiple data rates or link ranges depending on factors such as energy consumption and efficiency. For instance, integrating a mmWave transceiver and WiFi as part of the same chipset can help improve the usability and wider acceptance of multiple applications such as WiFi and high-speed fixed wireless access.

A radio transceiver architecture, such as the frequency-agile transceiver architecture, that simultaneously or sequentially supports low-band and high-band spectrums may also find usability in multi-standard applications such as internet-ofthings. Internet-of-things based sensors currently rely on multiple standards defined for frequencies which coincide with low-band 5G, where low-power consumption and coverage are more important than bandwidth and data rates. However, at the same time, 5G also defines the mmWave portion of the spectrum for use with internet-of-things (IoT) based sensors due to low latency. A radio architecture that supports both low frequencies and high frequencies can easily support similar applications based on multiple communication standards.

**In** this case, a single radio transmitter and/or radio receiver system that operates at both low/mid and high bands means the operators can operate the system in either mode, depending on the coverage needed but at the expense of diminished data rate.

Prior solutions largely treat multi-band transmission as a matter of controlling different transceivers for use with a single antenna, such as the transmitter system 100. Such solutions are often unable to support spaced frequency bands which are far apart, such as for 5G systems. Low-band 5G or mid-band 5G fall below 6GHz and high-band, or millimetre wavelength, 5G is above 24 GHz. Conventional solutions are based on the presupposition that the frequency bands are close enough such that a single antenna can be reused between these various chipsets by means of switching between the paths. The frequency-agile transceiver 200 and the multi-beam frequency-agile transceiver 300 are suitable for use on both sub-6GHz and millimetre wavelength frequencies.

The disclosed frequency-agile transceiver presents a single transceiver that can operate at two different frequency bands where the two frequency bands are spaced far apart in the order of many decades. The frequency-agile transceiver can be integrated on a single chip which may reduce the cost of mobile phones or even radios as a single chipset can access two different frequency bands using a single chip, instead of two chips or chipsets. As such, the frequency-agile transceiver has the potential to support more compact mobile phone handsets while supporting base-stations which may house both low-frequency sub-6GHz 5G and mmWave 5G radios.

The beamforming frequency-agile transceiver architecture may reduce the number of beamforming transmit and/or receive elements needed to perform beamforming using two different frequency bands spaced far apart. Both low/mid-band sub-6GHz 5G signals and high-band mmWave-5G signals can be supported with a single chipset.

The frequency-agile transceiver architecture may assist in cost reduction for base stations as high frequency signals, such as millimetre wavelength, can support high data rates the low/mid frequency signal, but come with short link range. Using high frequency signals requires more radios/base stations to provide adequate coverage, compared to low/mid frequency signals, which increases costs in terms of installation and upkeep. At the same time, low-frequency signals have longer range, but less capacity in terms of data rates compared to high frequency signals. Base-stations/radios using mmWave 5G, high frequency, signals are useful for high-data rate and short-range scenarios, while base-stations using low-frequency sub-6GHz (low/mid-band 5G) signals are beneficial for long-range but relatively lower data rate scenarios.

As such, one way to realise benefits of a high frequency radio network, based on 5G or 6G standards, is to develop a radio-frequency chipset that can be used to build radio or base-station hardware that can support signals in a high frequency band as well as signals in a low-frequency band. Having a base-station/radio that support both bands means that the base-station can operate using high frequency signals for shorter link range and high-data rate conditions, and switch to low/mid frequency signals for long link range and low-data rate conditions.

Using a single chipset, such as a chipset with the frequency-agile transceiver architecture, to support both high frequency signals and low/mid frequency signals may reduce hardware and therefore reduced costs.

Similarly, for mobile phone handsets using a chipset with the frequency-agile transceiver architecture, different wireless standards, such as 3G, 4G, 5G, WiFi, and GPS, and different frequency bands across different regions or different frequency bands are may be supported. The cost and weight of mobile phones may be reduced as the number of chipsets employed is reduced. Further, mobile phone manufacturers, dealing with other complications such as thermal dissipation or heat generated by chipsets, may be able to use the frequency-agile transceiver architecture to reduce the number of chipsets to reduce the cost and weight of the mobile phone as well as reducing the thermal dissipation.

Throughout this specification and the claims which follow, unless the context requires otherwise, the word "comprise", and variations such as "comprises" or "comprising", will be understood to imply the inclusion of a stated integer or step or group of integers or steps but not the exclusion of any other integer or step or group of integers or steps.

The reference in this specification to any prior publication (or information derived from it), or to any matter which is known, is not, and should not be taken as, an acknowledgement or admission or any form of suggestion that that prior publication (or information derived from it) or known matter forms part of the common general knowledge in the field of endeavour to which this specification relates.

## Claims

1. A frequency-agile transmitter for transmitting either a low or a high frequency signal, the transmitter comprising:
a low frequency mixing stage for combining at least two input signals encoding input data, the at least two input signals being further combined with a local oscillator signal when transmitting the low frequency signal;
a transmit element for receiving output from the low frequency mixing stage, the transmit element including:
a signal controller for selectively sending the output from the low frequency mixing stage to one of a low frequency transmission path, to transmit the low frequency signal, and a high frequency mixing stage,
wherein the high frequency mixing stage up-converts the output from the low frequency mixing stage with a local oscillator signal when transmitting the high frequency signal along the high frequency transmission path; and
at least one antenna for outputting one of the low frequency signal and the high frequency signal.

2. The frequency-agile transmitter according to claim **1,** wherein the signal controller is a radio frequency switch.

3. The frequency-agile transmitter according to claim 1 or 2, wherein the frequency-agile transmitter is a beamforming frequency-agile transmitter, the beamforming frequency-agile transmitter further comprising:
a power splitter for generating at least two outputs from the low frequency mixing stage;
a plurality of digital phase shifters for adjusting the phase of the at least two outputs; and
a plurality of the transmit elements, each of the plurality of transmit elements receiving output from one of the plurality of digital phase shifters.

4. The frequency-agile transmitter according to claim 3, wherein each of the plurality of transmit elements has an antenna for the low frequency transmission path and an antenna for the high frequency transmission path.

5. The frequency-agile transmitter according to claim 3 or 4, further comprising:
a plurality of variable gain amplifiers, each of the plurality of variable gain amplifiers operating on one of the at least two outputs.

6. The frequency-agile transmitter according to claim 5, wherein the plurality of digital phase shifters and the plurality of variable gain amplifiers enable generation of a narrow beam including the high-frequency signal and a narrow beam including the low-frequency signal, in a far-field of each of the at least one antenna of the plurality of transmit elements

7. The frequency-agile transmitter according to claim 5 or 6, wherein each of the plurality of variable gain amplifiers and the plurality of digital phase shifters have a different configuration when using the low frequency transmission path compared to the high frequency transmission path.

8. The frequency-agile transmitter according to claim 1 or 2, wherein the frequency-agile transmitter is a selectable mode frequency-agile transmitter that can transmit in a mode selected from the set consisting of a MIMO mode and a beamforming mode, the selectable mode frequency-agile transmitter further comprising:
a plurality of lines, a first of the plurality of lines receiving input of the at least two input signals and remaining lines of the plurality of lines being switchable between the at least two input signals and separate MIMO input signals;
a plurality of digital phase shifters for adjusting the phase of each of the lines; and
a plurality of the transmit elements, each of the plurality of transmit elements receiving output from one of the plurality of digital phase shifters to transmit a signal from one of the lines.

9. The selectable mode frequency-agile transmitter of claim 8, wherein each of the MIMO input signals for the remaining lines are received from a corresponding digital to analog converter,
wherein each of the digital to analog converters are powered off when the selectable mode frequency-agile transmitter is operating in the beamforming mode.

10. The frequency-agile transmitter according to anyone of the claims 1 to 7, wherein the frequency-agile transmitter is a selectable mode frequency-agile transmitter that can transmit in a mode selected from the set consisting of a MIMO mode and a beamforming mode, the selectable mode frequency-agile transmitter further comprising:
a plurality of lines, each of the plurality of lines having identical phase when in MIMO mode and an independent phase when in beamforming mode.

11. A frequency-agile receiver for receiving a either low or a high frequency signal, the receiver comprising:
a receive element including:
at least one antenna for receiving the low frequency signal and the high frequency signal; and
a signal controller for selectively sending an output to a low frequency mixing stage from a low frequency reception path, for receiving the low frequency signal, and from a high frequency mixing stage,
wherein the high frequency mixing stage down-converts the high frequency signal with a local oscillator signal when receiving the high frequency signal of the high frequency reception path; and
a low frequency mixing stage for receiving output from the receive element and separating at least two signals encoding data, the at least two signals being further separated from a local oscillator signal when receiving the low frequency signal.

12. The frequency-agile receiver according to claim 11, wherein the signal controller is a radio frequency switch.

13. The frequency-agile receiver according to claim 11 or 12, wherein the frequency-agile receiver is a beamforming frequency-agile receiver, the beamforming frequency-agile receiver further comprising:
a plurality of the receive elements, each of the plurality of receive elements receiving at least one of the low frequency signal and the high frequency signal;
a plurality of digital phase shifters, each of the phase shifter adjusting the phase of an output from one of the plurality of receive elements; and
a power combiner for combining an output from the plurality of phase shifters and sending a combined signal to the low frequency mixing stage.

14. The frequency-agile receiver according to claim 13, wherein each of the plurality of receive elements have an antenna for the low frequency reception path and an antenna for the high frequency reception path.

15. The frequency-agile receiver according to claims 13 or 14, further comprising:
a plurality of variable gain amplifiers, each of the plurality of variable gain amplifiers operating on the output from one of the plurality of receive elements.

16. The frequency-agile receiver according to claim 15, wherein the plurality of digital phase shifters and the plurality of variable gain amplifiers enable reception of a narrow beam including the high-frequency signal and a narrow beam including the low-frequency signal.

17. The frequency-agile receiver according to claim 15 or 16, wherein each of the plurality of variable gain amplifiers and the plurality of digital phase shifters have a different configuration when using the low frequency reception path compared to the high frequency reception path.

18. The frequency-agile receiver according to claim 11 or 12, wherein the frequency-agile receiver is a selectable mode frequency-agile receiver that can receive in a mode selected from the set consisting of a MIMO mode and a beamforming mode, the selectable mode frequency-agile receiver further comprising:
a plurality of lines, a first of the plurality of lines outputting the at least two signals and remaining lines of the plurality of lines being switchable between outputting the at least two signals and separate MIMO output signals, each line having:
one of the plurality of receive elements, each of the plurality of receive elements receiving at least one of the low frequency signal and the high frequency signal; and
one of a plurality of digital phase shifters, the phase shifter adjusting the phase of an output from the receive element.

19. The selectable mode frequency-agile receiver of claim 18, wherein each of the MIMO output signals for the remaining lines are sent to a corresponding analog to digital converter,
wherein each of the analog to digital converters being powered off when the selectable mode frequency-agile receiver is operating in the beamforming mode.

20. The frequency-agile receiver according to anyone of the claims 11 to 17, wherein the frequency-agile receiver is a selectable mode frequency-agile receiver that can receive in a mode selected from the set consisting of a MIMO mode and a beamforming mode, the selectable mode frequency-agile receiver further comprising:
a plurality of lines, each of the plurality of lines having identical phase when in MIMO mode and an independent phase when in beamforming mode.
